# EUROPEAN PATENT SPECIFICATION

(11) **EP 2 479 479 B1**
(45) Date of publication and mention of the grant of the patent: **30.07.2014**
(21) Application number: 10817011.9
(22) Date of filing: 19.08.2010
(51) Int. Cl.: G02F 1/1335

(54) **LIGHTING DEVICE, DISPLAY DEVICE, AND TELEVISION RECEIVER**
BELEUCHTUNGSVORRICHTUNG, ANZEIGEVORRICHTUNG UND FERNSEHEMPFÄNGER
DISPOSITIF D'ÉCLAIRAGE, DISPOSITIF D'AFFICHAGE ET RÉCEPTEUR DE TÉLÉVISION

(30) Priority: 16.09.2009 JP 2009214918
(43) Date of publication of application: 25.07.2012
(73) Proprietor: Sharp Kabushiki Kaisha, Osaka-shi, Osaka 545-8522 (JP)
(72) Inventor: SHIMIZU, Takaharu, Osaka-shi, Osaka 545-8522 (JP)
(74) Representative: Müller-Boré & Partner Patentanwälte PartG mbB
(86) International application number: PCT/JP2010/063990
(87) International publication number: WO 2011/033898

(56) References cited:
- EP-A1- 1 801 637
- WO-A1-2008/108035
- WO-A1-2009/107512
- JP-A- 2008 268 338
- US-A1- 2005 225 960
- US-A1- 2006 244 891
- US-A1- 2009 109 374
- US-A1- 2009 135 331

## Description

### TECHNICAL FIELD

The present invention relates to a lighting device, a display device, and a television receiver.

### BACKGROUND ART

A liquid crystal panel included in a liquid crystal display device, such as a liquid crystal television set, does not emit light, and thus a backlight unit is required as a separate lighting device. The backlight unit is arranged behind the liquid crystal panel (on a side opposite to a display surface side). The backlight unit includes a chassis having an opening on a liquid crystal panel side, a light source (such as a cold cathode tube) housed in the chassis, an optical member (such as a diffuser sheet) arranged at the opening of the chassis to effectively discharge light emitted from the light source toward the liquid crystal panel, and a reflection sheet laid in the chassis to reflect light emitted from the light source to the side of the optical member and the liquid crystal panel. Note that a backlight unit disclosed in the below-mentioned Patent Document 1, for example, is known.

Patent Document 1: Japanese Unexamined Patent Publication No. 2006-146126

### Problem to be Solved by the Invention

The reflection sheet forming the backlight unit includes a bottom portion arranged along the inner surface of the bottom plate in the chassis, and a rising portion rising at the optical member side from the bottom portion. The rising portion can direct reflected light toward the screen center side, for example.

However, the rising portion of the reflection sheet is a rising form from the bottom portion. Accordingly, a rising angle from the bottom portion, for example, is liable to fluctuate, and deformation such as warpage or bending is likely to occur, for example. Thus, the shape tends to be unstable. If the shape of the rising portion is unstable, the reflecting direction of reflected light is also unstable. This results in a possibility that unevenness occurs in the exit light in the backlight unit. WO 2009/107512 A1 discloses a lighting apparatus provided with a chassis; a cold-cathode tube stored in the chassis; a diffusion plate arranged at a position sandwiching the cold-cathode tube with the chassis; a main body section attached to the chassis; and a lamp clip which is arranged on the main body section and has a lamp holding section for holding the cold-cathode tube. The chassis is provided with a recessed section wherein the main body section fits.

US 2005/225960 A1 discloses a backlight module comprising a housing, a light source disposed on the housing, a diffuser positioned over the light source and a spacer disposed between the housing and the diffuser to maintain a distance therebetween. The spacer comprises a supporting portion to support the diffuser to maintain the separation and a base connected to the supporting portion and fixed on the housing. The base comprises a hook engaging the housing and a connecting portion connecting the supporting portion and the hook. A reflective layer is formed on the supporting portion to reflect the light from the light source.

### DISCLOSURE OF THE PRESENT INVENTION

The present invention was made in view of the foregoing circumstances, and has an object to suppress uneven brightness.

### Means for Solving the Problem

A lighting device according to the present invention includes a light source, a chassis including a bottom plate arranged on a side opposite to a light exit side with respect to the light source and configured to house the light source therein, a reflection sheet including a bottom portion and a rising portion, the bottom portion extending along the bottom plate and the rising portion rising from the bottom portion to a side of the light exit side, the reflection sheet configured to reflect light; a first holding member arranged on a side opposite to the light exit side with respect to the rising portion and fixed to the chassis, and a second holding member arranged on the light exit side with respect to the rising portion, and configured to sandwich the rising portion with the first holding member.

The rising portion of the reflection sheet is formed to rise from the bottom portion to the light exit side. Accordingly, a rising angle from the bottom portion may change or deformation such as warpage or bending is likely to occur, for example. Thus, the shape of the rising portion tends to be unstable. In this regard, according to the present invention, the rising portion is sandwiched between the first holding member, that is arranged on a side opposite to the light exit side with respect to the rising portion and fixed to the chassis, and the second holding member, that is arranged on the light exit side of the rising portion, thereby regulating the displacement of the rising portion to the light exit side and to the side opposite to the light exit side. This can suppress change of the rising angle of the rising portion with respect to the bottom portion, and can suppress occurrence of deformation such as warpage or bending in the rising portion. That is, the shape of the rising portion can be stably kept. Therefore, the directivity of the reflected light can be stabilized, so that unevenness hardly occurs in the light exited from the lighting device.

The following includes configurations which are preferable as embodiments of the present invention.
(1) The first holding member has a receiving surface that receives the rising portion from a side opposite to the light exit side, and the second holding member has a pressing surface that presses the rising portion from the light exit side. With this configuration, the receiving surface of the first holding member receives the rising portion from the side opposite to the light exit side, and the pressing surface of the second holding member presses the rising portion from the light exit side, thereby making it possible to stably hold the shape of the rising portion.
(2) At least one of the receiving surface and the pressing surface may have a shape that follows the rising portion. With this configuration, at least one of the receiving surface and the pressing surface has a shape that follows the rising portion. Accordingly, the rising portion can be held more appropriately and maintain an excellent shape stability.
(3) The rising portion and at least one of the receiving surface and the pressing surface may have an arcuate sectional shape taken along a direction in which the rising portion rises from the bottom portion. With this configuration, the shape of the rising portion having an arcuate sectional shape can be appropriately retained by at least one of the receiving surface and the pressing surface that have an arcuate cross sectional shape.
(4) The rising portion and at least one of the receiving surface and the pressing surface may have substantially a same curvature. With this configuration, at least one of the receiving surface and the pressing surface can be reliably brought into contact with the rising portion, thereby providing a more excellent shape stability of the rising portion.
(5) The rising portion and at least one of the receiving surface and the pressing surface may make an acute angle with respect to the bottom portion. With this configuration, the light reflected by the rising portion forms an angle based on the angle formed with respect to the bottom portion. The angle is formed as an acute angle, thereby making it possible to satisfactorily output the light. The shape of the rising portion that makes an acute angle with the bottom portion can be appropriately retained by at least one of the receiving surface and the pressing surface that form an acute angle with respect to the bottom portion.
(6) The first holding member and the second holding member may have a fitting-retaining structure configured to hold the first holding member and the second holding member by fitting to each other. With this configuration, the fitting-retaining structure retains the first holding member and the second holding member, thereby providing a more excellent shape stability of the rising portion held between the first and second holding members.
(7) The fitting-retaining structure may include at least a pair of fitting-retaining structures provided at positions spaced apart from each other in plan view. This configuration prevents the first holding member and the second holding member that are retained by the fitting-retaining structure from being rotated.
(8) The fitting-retaining structure may include a fitting projection arranged on the first holding member and projecting to a side opposite to the light exit side, and a fitting recessed portion arranged on the second holding member and configured to receive the fitting projection. With this configuration, the fitting projection of the first holding member is fit into the fitting recessed portion of the second holding member, thereby making it possible to suitably retain the first and second holding members.
(9) The rising portion may be provided with an insertion hole through which the fitting-retaining structure can be inserted. With this configuration, the fitting-retaining structure is inserted into the insertion hole, thereby allowing mounting of the second holding member with respect to the first holding member.
(10) The lighting device may further include an optical member arranged on the light exit side with respect to the light source. The second holding member may be provided with a supporting portion having an axis crossing a space within the chassis and configured to support the optical member from the side opposite to the light exit side. This configuration provides the second holding member with a function of supporting the optical member from the side opposite to the light exit side.
(11) The supporting portion may have an axis direction substantially perpendicular to a plate surface of the optical member. With this configuration, the supporting portion can appropriately support the optical member. The supporting portion is prevented from being viewed as a dark portion via the optical member, and the uneven brightness is less likely to occur.
(12) The second holding member may have a surface light reflectance higher than that of the first holding member. With this configuration, the light can be efficiently reflected on the front surface of the second holding member arranged on the light exit side of the rising portion, thereby maintaining effective light use efficiency. Furthermore, the first holding member arranged on the side opposite to the light exit side with respect to the rising portion may have a smaller light reflectance on the front surface than that of the second holding member. This easily reduces a manufacturing cost associated with the first holding member.
(13) The second holding member may be smaller in a plan view size than the first holding member. With this configuration, the ratio of the surface area of the second holding member to the surface area of the reflection sheet can be reduced, as compared to the case where the size of the second holding member in plan view is equal to that of the first holding member. Accordingly, even when the reflection sheet and the second holding member have different light reflectance, the unevenness of the light reflectance can be prevented from occurring in the chassis.
(14) The rising portion may have a curved sectional shape taken along a direction in which the rising portion rises from the bottom portion, and the curved sectional shape has an inflection point. The first holding member may be arranged on one side from the inflection point and the second holding member / may be arranged on another from the inflection point. Further, the first holding member and the second holding member may be arranged to partially overlap with each other in plan view. With this configuration, the rising portion having a complicated sectional shape with an inflection point can be arranged at positions sandwiching the inflection point, and can be suitably held by the first holding member and the second holding member which partially overlap with each other in plan view.
(15) The first holding member may be integrally formed with the chassis. With this configuration, the first holding member is integrally formed with the chassis, thereby fixed to the chassis. This eliminates the need for operation of mounting the first holding member to the chassis.
(16) The second holding member may be formed to partially support the rising portion in a direction in which the rising portion rises from the bottom portion. With this configuration, the size of the second holding member can be reduced, as compared to the case where the second holding member holds the entire length of the rising portion. Accordingly, the ratio of the surface area of the second holding member to the surface area of the reflection sheet can be reduced. This can prevent the unevenness of the light reflectance in the chassis from occurring even when the reflection sheet and the second holding member have different light reflectance.
(17) The bottom plate may have an end portion provided with a side plate rising to the light exit side, and the side plate may have a side plate rising end provided with an outwardly overhanging support plate. The rising portion may have a rising end provided with an extending portion extending along the support plate. With this configuration, the bottom portion of the reflection sheet is arranged along the bottom plate and the extending portion is arranged along the support plate, thereby making it possible to stabilize the shape of the rising portion located between the bottom portion and the extending portion.
(18) The chassis may be defined into a light source arrangement area in which the light source is arranged, and a light source non-arrangement area in which the light source is not arranged. With this configuration, the light source non-arrangement area is provided in the chassis. This makes it possible to reduce the number of light sources as compared to the case where light sources are uniformly arranged on the entire chassis, and to achieve a reduction in cost and power saving of the lighting device.
(19) The chassis may be defined into at least a first end portion, a second end portion located at an end portion on a side opposite to the first end portion, and a middle portion sandwiched between the first end portion and the second end portion. The middle portion may correspond to the light source arrangement area, and each of the first end portion and the second end portion may corresponds to the light source non-arrangement area. With this configuration, a sufficiently high level of brightness can be ensured in the middle portion of the lighting device, and a high level of brightness can also be ensured in the display middle portion of the display device including the lighting device, thereby obtaining favorable visibility.
(20) At least a part of the bottom portion may be arranged in the light source arrangement area, and at least a part of the rising portion may be arranged in the light source non-arrangement area. The amount of light within the chassis tends to be smaller in the light source non-arrangement area than in the light source arrangement area. However, arrangement of the rising portion rising from the bottom portion to the light exit side in the light source non-arrangement area prevents generation of a dark portion in the light source non-arrangement area. This can suppress the uneven brightness.
(21) The lighting device may further include an optical member arranged on the light exit side of the light source. At least a surface of the optical member facing the light source may be configured to have light reflectance higher in a portion overlapping with the light source non-arrangement area than in a portion overlapping with the light source arrangement area. With this configuration, the light emitted from the light source reaches a portion having a relatively large light reflectance in the optical member, and thus the most part of the light is reflected (that is, not transmitted), thereby suppressing the brightness of illumination light with respect to the light emission amount from the light source. On the other hand, the reflected light can be reflected within the chassis and can be reached to the light source non-arrangement area. A portion overlapping with the light source non-arrangement area in the optical member has a relatively small light reflectance. Therefore, a larger part of the light is transmitted, thereby obtaining a predetermined brightness of illumination light.
(22) At least the surface of the optical member facing the light source may have the light reflectance decreasing in a direction away from the light source. With this configuration, uniformity in brightness of illumination light can be achieved between the light source arrangement area and the light source non-arrangement area.
(23) The second holding member may have a surface in white color. With this configuration, the light can be favorably reflected on the front surface of the second holding member arranged on the light exit side with respect to the rising portion. Accordingly, the light emitted from the light source is effectively used.
(24) The light source may be a hot cathode tube. This improves brightness.
(25) The light source may be a cold cathode tube. This extends life of the light source and dimming of light is easily performed.
(26) The light source maybe an LED. This extends life of the light source and reduces power consumption.

Next, to solve the above-mentioned problem, a display device according to the present invention includes the lighting device described above, and a display panel that performs display utilizing light exited from the lighting device.

According to the display device described above, the lighting device that supplies light to the display panel hardly generates the uneven brightness, thereby achieving a display with an excellent display quality.

A liquid crystal panel can be used as the display panel. Such a display device is applicable as a liquid crystal display device for various applications, such as a television and a display of a personal computer, and is particularly suitable for a large screen.

### Advantageous Effect of the Invention

According to the present invention, the occurrence of uneven brightness can be suppressed.

### BRIEF DESCRIPTION OF THE DRAWINGS

FIG. 1 is an exploded perspective view showing a schematic configuration of a television receiver according to a first embodiment of the present invention;
FIG. 2 is an exploded perspective view showing a schematic configuration of a liquid crystal display device included in a television receiver;
FIG. 3 is a sectional view showing a sectional configuration along the short-side direction of the liquid crystal display device;
FIG. 4 is a sectional view showing a sectional configuration along the long-side direction of the liquid crystal display device;
FIG. 5 is a plan view showing an arrangement configuration of a hot cathode tube and a second holding member (first holding member) of a chassis included in the liquid crystal display device;
FIG. 6 is an enlarged sectional view of a principal part shown in FIG. 3;
FIG. 7 is a sectional view taken along the line vii-vii of FIG. 6;
FIG. 8 is an enlarged sectional view of a principal part shown in FIG. 3 showing a state before a reflection sheet is laid in the state where a first holding member is mounted to a chassis;
FIG. 9 is an enlarged sectional view of the principal part shown in FIG. 3 showing a state before a second holding member is mounted in the state where the reflection sheet is laid on the chassis;
FIG. 10 is a plan view illustrating a light reflectance distribution in a diffuser plate;
FIG. 11 is an enlarged plan view of a principal part showing a schematic configuration of a surface opposite to a hot cathode tube in the diffuser plate;
FIG. 12 is a graph showing a change in light reflectance along the line xii-xii shown in FIG. 10 in the short-side direction of the diffuser plate;
FIG. 13 is a graph showing a change in light reflectance along the xiii-xiii shown in FIG. 10 in the long-side direction of the diffuser plate;
FIG. 14 is an enlarged sectional view of a principal part of both holding members and a reflection sheet according to a first modified example of the first embodiment;
FIG. 15 is an enlarged sectional view of a principal part of both holding members and a reflection sheet according to a second modified example of the first embodiment;
FIG. 16 is an enlarged sectional view of a principal part of both holding members and a reflection sheet according to a third modified example of the first embodiment;
FIG. 17 is an enlarged sectional view of a principal part of both holding members and a reflection sheet according to a fourth modified example of the first embodiment;
FIG. 18 is an enlarged sectional view of a principal part showing a state before a second holding member is mounted;
FIG. 19 is an enlarged sectional view of a principal part of both holding members and a reflection sheet according to a fifth modified example of the first embodiment;
FIG. 20 is a graph showing a change in light reflectance in the short-side direction of a diffuser plate according to a sixth modified example of the first embodiment;
FIG. 21 is a graph showing a change in light reflectance in the short-side direction of a diffuser plate according to a seventh modified example of the first embodiment;
FIG. 22 is an enlarged sectional view of both holding members and a reflection sheet according to a second embodiment of the present invention;
FIG. 23 is a sectional view taken along the line xxiii-xxiii of FIG. 22;
FIG. 24 is an enlarged sectional view of both holding members and a reflection sheet according to a third embodiment of the present invention;
FIG. 25 is an enlarged sectional view of a principal part showing a state before a second holding member is mounted;
FIG. 26 is an enlarged sectional view of a principal part of both holding members and a reflection sheet according to a fourth embodiment of the present invention;
FIG. 27 is a plan view showing an arrangement configuration of a hot cathode tube and both holding members in a chassis according to a fifth embodiment of the present invention;
FIG. 28 is a sectional view taken along the line xxviii-xxviii of FIG. 27;
FIG. 29 is a sectional view taken along the line xxix-xxix of FIG. 27;
FIG. 30 is a plan view showing an arrangement configuration of a cold cathode tube and both holding members in a chassis according to a sixth embodiment of the present invention;
FIG. 31 is a sectional view taken along the line xxxi-xxxi of FIG. 30;
FIG. 32 is a plan view showing an arrangement configuration of LEDs and both holding members in a chassis according to a seventh embodiment of the present invention; and
FIG. 33 is a sectional view taken along the line xxxiii-xxxiii of FIG. 32.

### BEST MODE FOR CARRYING OUT THE INVENTION

### <First embodiment>

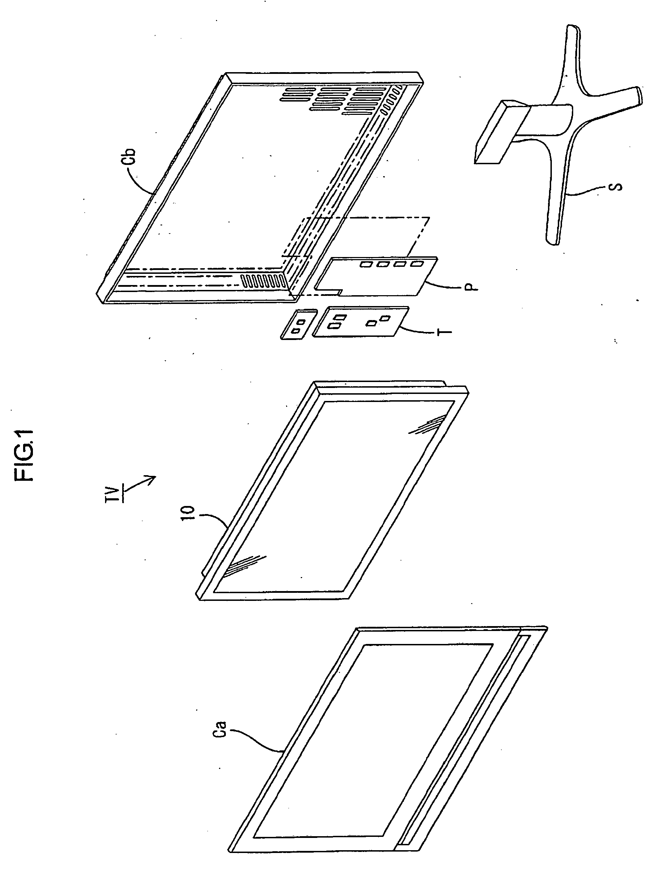

A first embodiment of the present invention will be described with reference to FIGS. 1 to 13. First, a configuration of a television receiver TV including a liquid crystal display device 10 will be described.

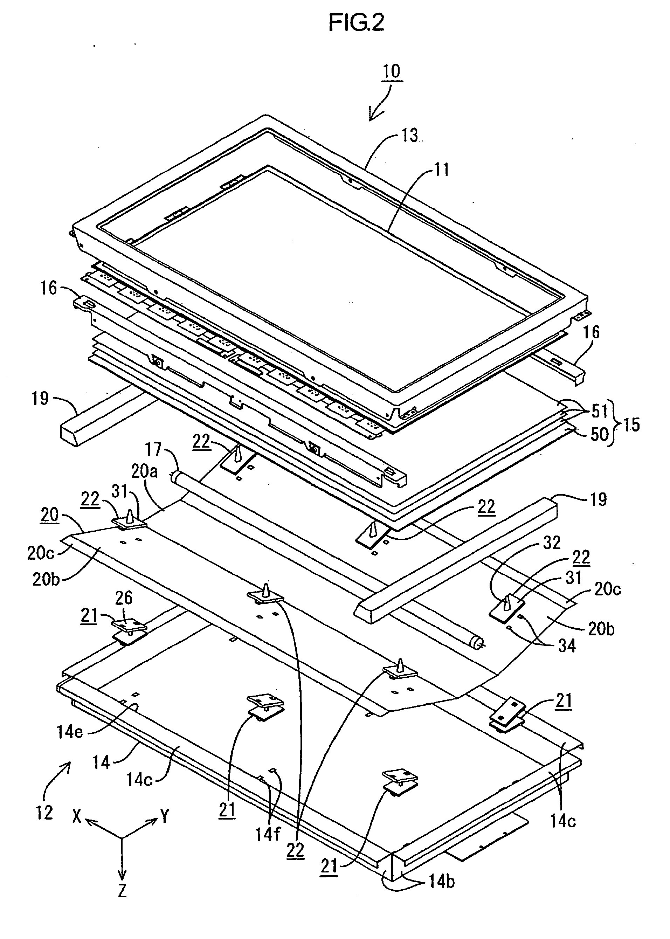

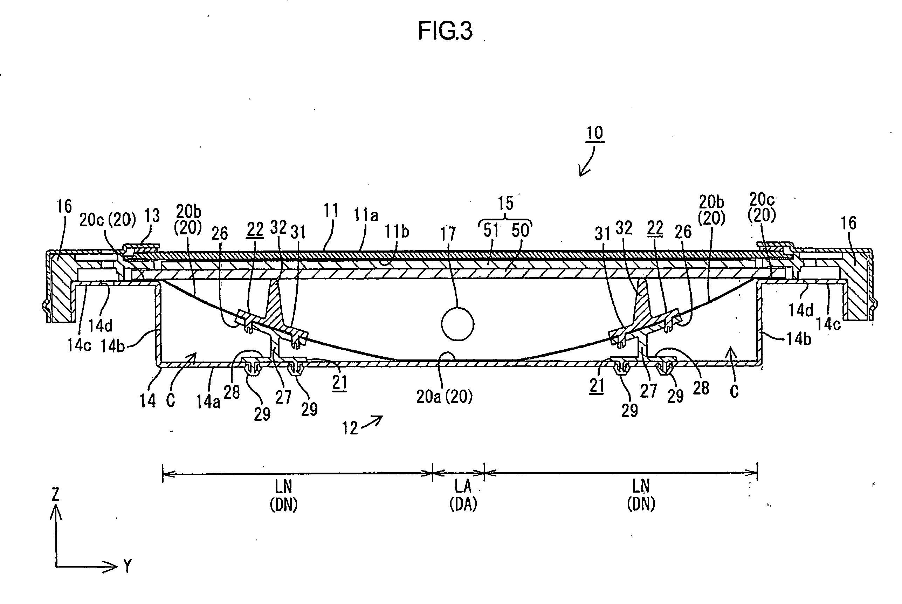

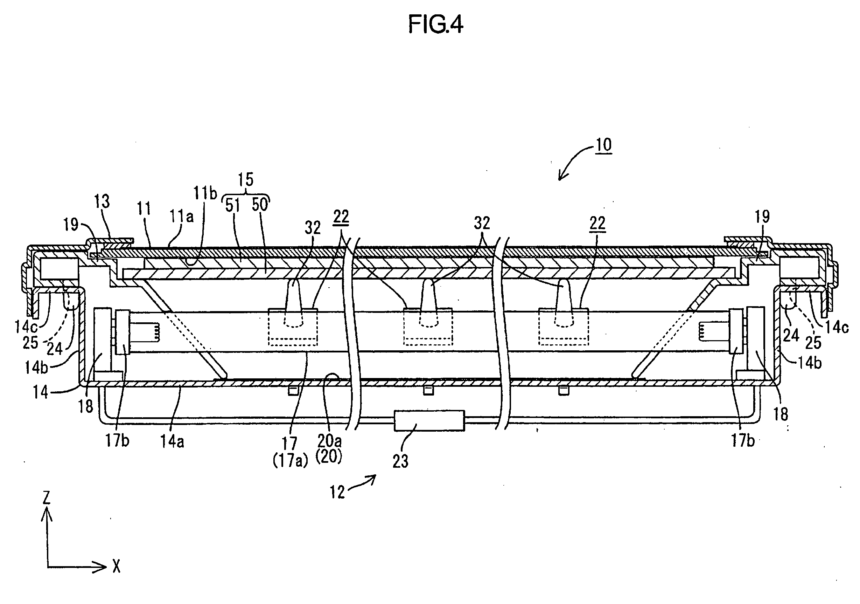

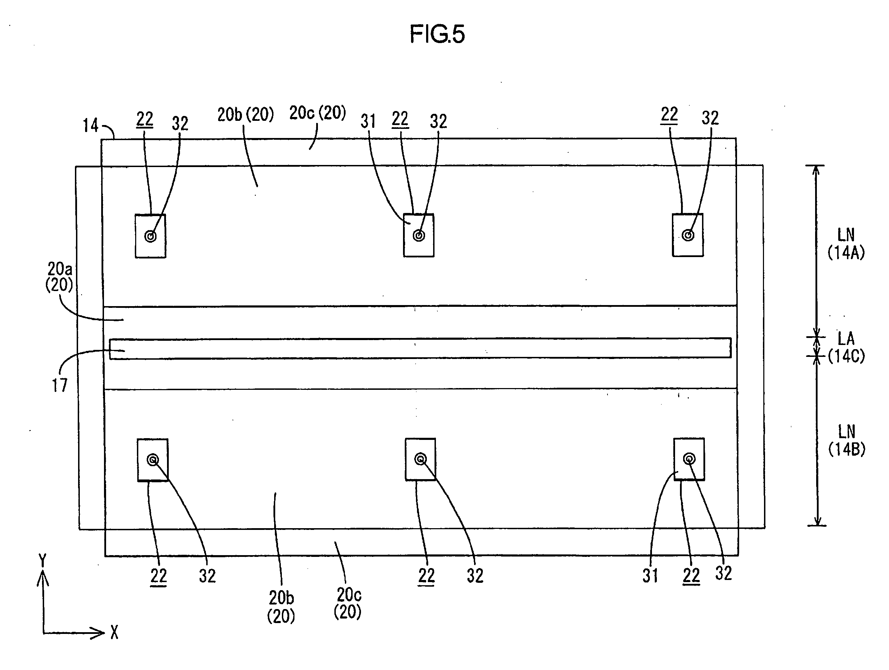

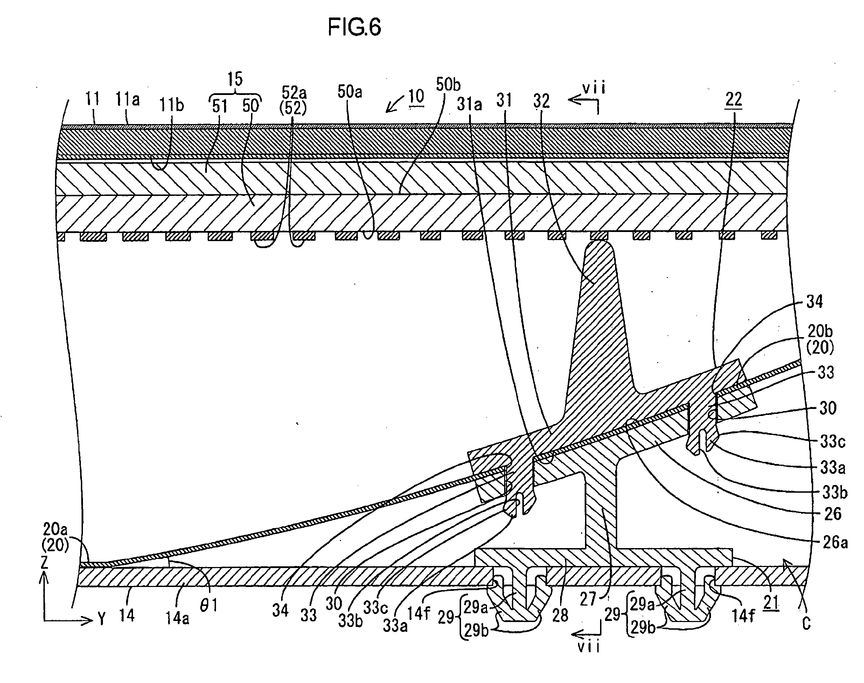

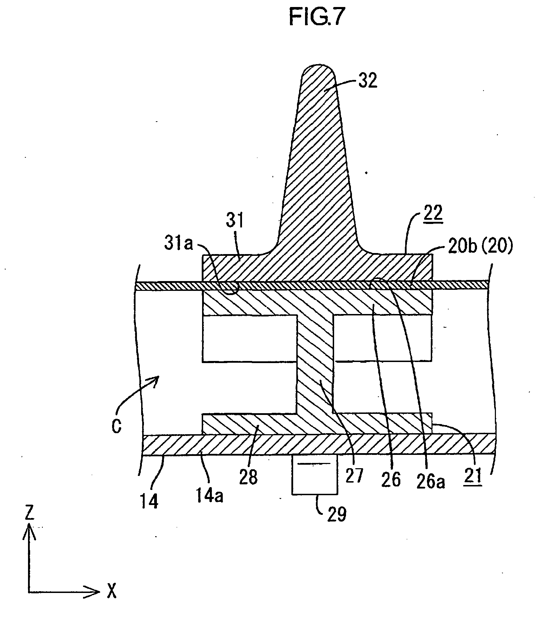

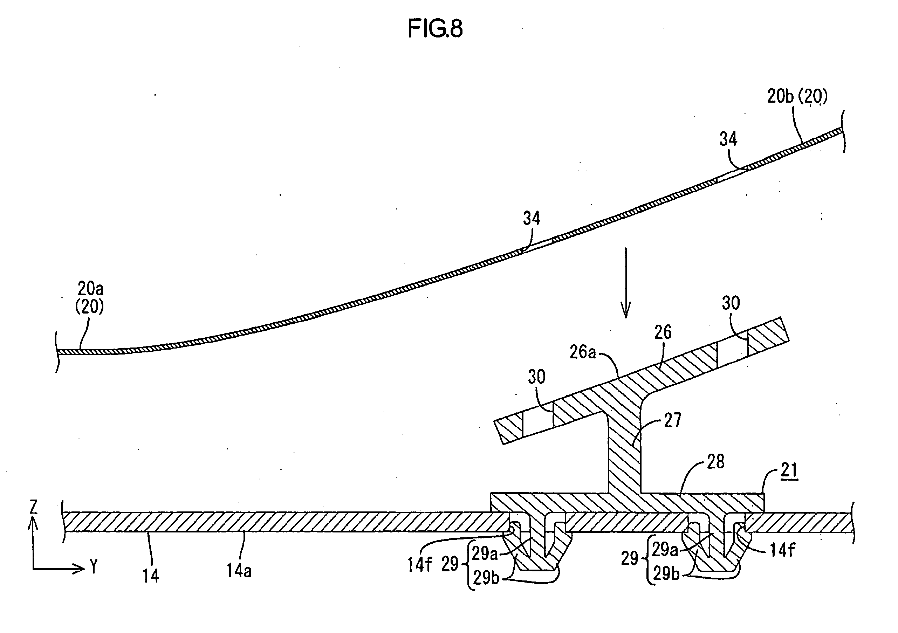

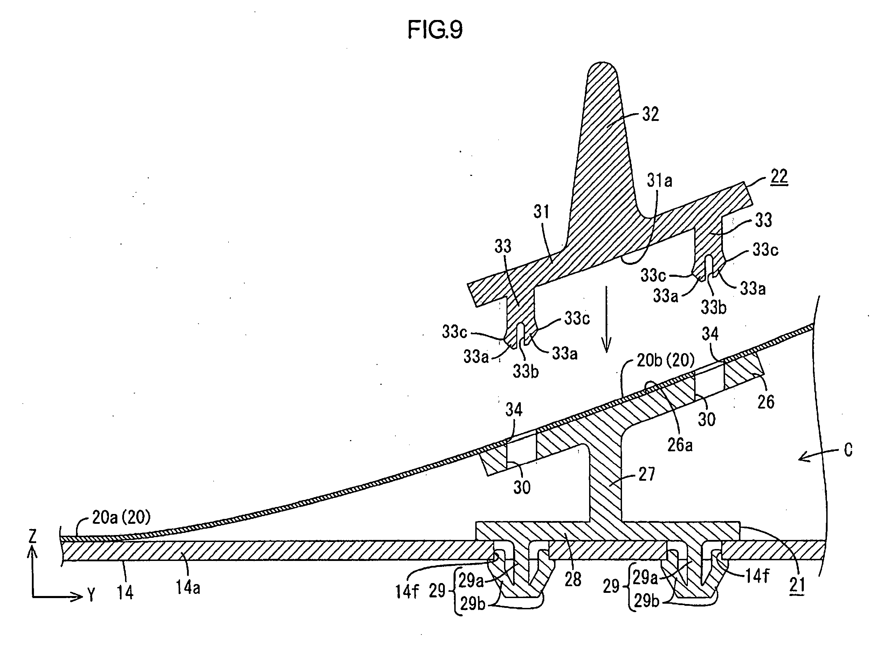

FIG. 1 is an exploded perspective view showing a schematic configuration of the television receiver of this embodiment. FIG. 2 is an exploded perspective view showing a schematic configuration of a liquid crystal display device included in the television receiver shown in FIG. 1. FIG. 3 is a sectional view showing a sectional configuration along the short-side direction of the liquid crystal display device shown in FIG. 2. FIG. 4 is a sectional view showing a sectional configuration along the long-side direction of the liquid crystal display device shown in FIG. 2. FIG. 5 is a plan view showing an arrangement configuration of a hot cathode tube and a second holding member (first holding member) of a chassis included in the liquid crystal display device shown in FIG. 2. FIG. 6 is an enlarged sectional view of a principal part shown in FIG. 3. FIG. 7 is a sectional view taken along the line vii-vii of FIG. 6. FIG. 8 is an enlarged sectional view of a principal part shown in FIG. 3 showing a state before a reflection sheet is laid in the state where the first holding member is mounted to the chassis. FIG. 9 is an enlarged sectional view of the principal part shown in FIG. 3 showing a state before the second holding member is mounted in the state where the reflection sheet is laid on the chassis. Note that in FIG. 5, the long-side direction of the chassis is referred to as an X-axis direction and the short-side direction thereof is referred to as a Y-axis direction.

As shown in FIG. 1, the television receiver TV according to this embodiment includes a liquid crystal display device 10, front and back cabinets Ca and Cb sandwiching the liquid crystal display device 10 to be housed, a power source P, a tuner T, and a stand S. The liquid crystal display device (display device) 10 is formed in a long square as a whole (rectangular shape, elongated shape), and is housed in a longitudinally mounted state. As shown in FIG. 2, this liquid crystal display device 10 includes a liquid crystal panel 11 serving as a display panel, and a backlight unit (lighting device) 12 serving as an external light source, which are integrally held by a frame-shaped bezel 13 or the like. This embodiment illustrates a configuration in which the screen size is 32 inches and the aspect ratio is 16:9. More specifically, the screen has a horizontal dimension (the dimension in the X-axis direction) of about 698 mm and a longitudinal dimension (the dimension in the Y-axis direction) of about 392 mm, for example.

Next, the liquid crystal panel 11 and the backlight unit 12, each of which constitutes the liquid crystal display device 10, will be described (see FIGS. 2 to 4).

The liquid crystal panel (display panel) 11 has a configuration in which a pair of glass substrates is bonded together with a predetermined gap therebetween and a liquid crystal is enclosed between both the glass substrates. One of the glass substrates is provided with switching components (for example, TFTs) connected to each of source wirings and gate wirings that are normal to each other, pixel electrodes respectively connected to the switching component, an alignment film, and the like. The other glass substrate is provided with a color filter in which coloring portions of R (red), G (green), B (blue), and the like are arranged in a predetermined array, counter electrodes, an alignment film, and the like. Note that polarizing plates 11a and 11b are arranged outside both the substrates (see FIGS. 3 and 4).

As shown in FIG. 2, the backlight unit 12 includes a substantially box-shaped chassis 14 having an opening 14e on the front side (the light exit side or the liquid crystal panel 11 side); an optical member 15 group (a diffuser plate (light diffusion member) 30 and a plurality of optical sheets 41 arranged between the diffuser plate 50 and the liquid crystal panel 11) arranged so as to cover the opening 14e of the chassis 14, and a frame 16 which is arranged along the long side of the chassis 14 and sandwiches the long-side edge portion of the optical member 15 group with the chassis 14 to thereby retain the long-side edge portion. Further, the chassis 14 includes a hot cathode tube 17 serving as a light source (linear light source), sockets 18 that relay an electrical connection between end portions of the hot cathode tube 17, and a holder 19 that collectively covers the end portions of the hot cathode tube 17 and the sockets 18. In addition, the chassis 14 includes a reflection sheet 20 that reflects light, and is provided with first holding members 21 and second holding members 22 for partially holding the reflection sheet 20 to retain the shape. Note that in the backlight unit 12, the side closer to the optical member 15 rather than the hot cathode tube 17 is referred to as the light exit side.

The chassis 14 is made of synthetic resin, and includes, as shown in FIGS. 3 and 4, a bottom plate 14a, side plates 14b rising from end portions on each side of the bottom plate 14a to the front side, and support plates 14c overhanging outwardly from the rising end of each side plate 14b, and forms a shallow, substantially box shape as a whole. The bottom plate 14a has a rectangular shape (elongated shape) in which the long-side direction and the short-side direction of the liquid crystal panel 11 are set to coincide with those of the optical member 15, and has a formation range in which the size in plan view of the liquid crystal panel 11 is substantially the same as that of the optical member 15. Further, at both ends in the long-side direction of the bottom plate 14a, an insertion hole for inserting the sockets 18 is formed. A pair of the side plates 14b is provided at both ends on the long side of the bottom plate 14a and a pair of the side plates 14b is also provided at both ends on the short side thereof. The rising angle from the bottom plate 14a is a substantially right angle. The support plates 14c are formed on the side plates 14b and the angle of bend with respect to each side plate 14b is a substantially right angle. The support plates 14c are in parallel with the bottom plate 14a. The reflection sheet 20 and the outer end portion of the optical member 15 are placed on the support plates 14c, and can receive them from the back side. As shown in FIG. 3, the support plates 14c each have a fixing hole 14d formed therein. The bezel 13, the frame 16, the chassis 14, and the like can be integrated by a screw or the like.

The reflection sheet 20 is made of synthetic resin (for example, made of PET foam), and has a white front surface which is excellent in light reflectivity. As shown in FIG. 2, the reflection sheet 20 is arranged on the inner surface side (on the side opposite to the hot cathode tube 17) in the chassis 14 and covers substantially the entire area. This reflection sheet 20 enables reflection of the light emitted from the hot cathode tube 17 to the optical member 15 side. The reflection sheet 20 has a rectangular shape (elongated shape) in which the chassis 14 coincides with the long-side direction and the short-side direction as a whole, and has a symmetrical shape with respect to the short-side direction. The reflection sheet 20 includes a bottom portion 20a arranged along the bottom plate 14a of the chassis 14, a pair of rising portions 20b rising from the end portion of the bottom portion 20a to the front side (light exit side), and a pair of extending portions 20c extending outwardly from the rising end of each rising portion 20b (the end portion on the side opposite to the bottom portion 20a side). As shown in FIGS. 3 and 5, the bottom portion 20a and the pair of rising portions 20b of the reflection sheet 20 have substantially the same size in plan view as the bottom plate 14a of the chassis 14, and is arranged to overlap with the bottom plate 14a in plan view. In other words, the bottom plate 14a of the chassis 14 is formed in the entire range of the bottom portion 20a and the pair of rising portions 20b of the reflection sheet 20 in plan view. Accordingly, the formation range of the bottom plate 14a is wider than that of the case where the bottom plate of the chassis is formed in the range overlapping only with the bottom portion 20a. By using the bottom plate 14a having a sufficiently wide formation range, components such as an inverter board 23 can be mounted on the back surface side, or a hanging attachment (not shown) or the like for hanging the liquid crystal display device 10 can be mounted.

Specifically, the bottom portion 20a is arranged on the center side in the short-side direction (at the position overlapping with a central portion 14C) in the bottom plate 14a of the chassis 14 in plan view, and is in parallel with the plate surface of the bottom plate 14a. The bottom portion 20a has a rectangular shape (elongated shape). The long-side direction of the bottom portion 20a coincides with the X-axis direction (the long-side direction of the chassis 14, or the axis direction of the hot cathode tube 17), and the short-side direction thereof coincides with the Y-axis direction (the short-side direction of the chassis 14). The long-side dimension of the bottom portion 20a is substantially the same as the long-side dimension of the bottom plate 14a of the chassis 14. Meanwhile, the short-side dimension of the bottom portion 20a is smaller than the short-side dimension of the bottom plate 14a. That is, the bottom portion 20a is formed to be smaller than the bottom plate 14a of the chassis 14 only in the short-side direction. The bottom portion 20a is arranged on the back side (on the side opposite to the light exit side) of the hot cathode tube 17, and is interposed between the bottom plate 14a and the hot cathode tube 17.

As shown in FIGS. 3 and 5, a pair of the rising portions 20b is arranged at positions sandwiching the bottom portion 20a in the short-side direction, and are arranged at both ends in the short-side direction (at the positions respectively overlapping with both ends 14A and 14B) in the bottom plate 14a of the chassis 14 in plan view. That is, each of the rising portions 20b rises from each long-side end of the bottom portion 20a in opposite directions. Each of the rising portions 20b is formed to gradually approach the diffuser plate 50 from the rising proximal end toward the rising distal end. A sectional shape of each rising portion 20b taken along the Y-axis direction, i.e., the direction from the bottom portion 20a toward each rising portion 20b, has a substantially arcuate shape, and has a substantially constant curvature (curvature radius). Specifically, each rising portion 20b has a bow-like shape warped toward the back side in the range from the rising proximal end (the end on the bottom portion 20a side) to the rising distal end (the end on the side opposite to the bottom portion 20a side (extending portion 20c side)). That is, each rising portion 20b is formed to be depressed (recessed) on the side of the bottom plate 14a (the side opposite to the light exit side) from a line (chord) connecting the rising proximal end and the rising distal end. In other words, the space retained between each rising portion 20b and the diffuser plate 50 is increased by the amount of depression on the side of the bottom plate 14a, as compared to the case where the rising portion is formed into a straight, inclined shape (slope shape) from the rising proximal end to the rising distal end. Each rising portion 20b has an arcuate plate surface as described above, and intersects with each of the Y-axis direction (the direction perpendicular to the axis direction of a supporting portion 32 described later) and the Z-axis direction (the axis direction of the supporting portion 32 described later) and also intersects with the plate surface of the bottom portion 20a. An angle formed by each rising portion 20b with respect to the Y-axis direction at the rising proximal end, that is, a rising angle θ1 of each rising portion 20b from the bottom portion 20a, is preferably an acute angle (an angle equal to or less than 90 degrees), and more preferably, an angle equal to or less than 45 degrees. Specially, the angle is about 20 degrees to 30 degrees, for example. This angle θ1 represents an angle formed by the tangential line at the rising proximal end of each rising portion 20b with respect to the Y-axis direction.

As shown in FIG. 3, the bottom portion 20a of the reflection sheet 20 extends along the inner surface of the bottom plate 14a of the chassis 14 but most of the gap is not retained. Meanwhile, each rising portion 20b is a form rising and spaced apart from the bottom plate 14a, and a gap C is retained with the bottom plate 14a. The gap C gradually increases from the rising proximal end side toward the rising distal end side. That is, each rising portion 20b is in a floating state on the front side with the gap C formed with the bottom plate 14a. This gap C forms a substantially triangular shape in which an inclined surface viewed from the side forms a recessed arcuate shape along the rising portion 20b. As shown in FIG. 5, each rising portion 20b is formed in a rectangular shape (elongated shape) in plan view. The long-side direction and the short-side direction are equal to those of the bottom portion 20a. The long-side dimension of each rising portion 20b is substantially the same as the long-side dimension of the bottom plate 14a of the chassis 14, while the short-side dimension of each rising portion 20b is smaller than the short-side dimension of the bottom plate 14a. That is, both the rising portions 20b are formed to be smaller than the bottom plate 14a of the chassis 14 only in the short-side direction. The area (short-side dimension) of each rising portion 20b is formed to be larger than the area (short-side dimension) of the bottom portion 20a.

Each extending portion 20c extends outwardly from the rising distal end portion of each rising portion 20b, and is arranged to overlap with each support plate 14c of the chassis 14 in plan view. Each extending portion 20c is formed to be in parallel with the plate surface of each of the bottom portions 20a (the bottom plate 14a and each support plate 14c) and is placed on the front side of each support plate 14c. Each extending portion 20c is held between each support plate 14c and the outer edge portion of the diffuser plate 50.

As shown in FIG. 2, the optical member 15 has a long square shape (rectangular shape) in plan view, like the liquid crystal panel 11 and the chassis 14. The optical member 15 is interposed between the liquid crystal panel 11 and the hot cathode tube 17, and includes a diffuser plate 50 arranged on the back side (on the hot cathode tube 17 side, on the side opposite to the light exit side), and an optical sheet 41 arranged on the front side (on the liquid crystal panel 11 side, on the light exit side). The diffuser plate 50 has a configuration in which a number of dispersion particles are scattered in a base substrate made of substantially transparent resin having a predetermined thickness. The diffuser plate 50 has a function of diffusing transmitted light, and specifically, also has a light reflecting function of reflecting light emitted from the hot cathode tube 17 as described later. The optical sheet 41 has a sheet shape having a smaller thickness than the diffuser plate 50, and is formed by stacking three sheets. Specifically, the optical sheet 41 includes a diffuser sheet, a lens sheet, and a reflection type polarizing sheet which are formed in the order from the diffuser plate 50 side (from the back side).

As shown in FIGS. 3 and 4, the hot cathode tube 17 forms a tubular (linear) shape as a whole, and includes a hollow glass tube 17a and a pair of electrodes 17b arranged at both ends of the glass tube 17a. Mercury, rare gas, and the like are enclosed in the glass tube 17a, and a fluorescent material is applied onto the inner wall surface thereof. Each electrode 17b includes a filament and a pair of terminals respectively connected to both ends of the filament. At both ends of the hot cathode tube 17, the sockets 18 are externally fit, and the terminals are connected to the inverter board 23, which is mounted on the outer surface side (the back surface side) of the bottom plate 14a of the chassis 14, through the sockets 18. The hot cathode tube 17 is supplied with a driving power from the inverter board 23, and the inverter board 23 can control the tube current value, that is, the brightness (lighting state). The hot cathode tube 17 is interposed between the diffuser plate 50 and the bottom plate 14a (reflection sheet 20) of the chassis 14, and is arranged at a position closer to the bottom plate 14a of the chassis 14 than the diffuser plate 50. Note that, the outer diameter dimension of the hot cathode tube 17 is greater than the outer diameter dimension (for example, about 4 mm) of the cold cathode tube, and is set to about 15.5 mm, for example.

As shown in FIG. 5, a single hot cathode tube 17 having the configuration as described above is housed in the chassis 14 in the state where the lengthwise direction (axis direction) thereof coincides with the long-side direction of the chassis 14. The position is at a substantially center in the short-side direction of the chassis 14. Specifically, when the bottom plate 14a (a portion opposite to each of the optical member 15 and the hot cathode tube 17) of the chassis 14 is partitioned into the first end portion 14A in the short-side direction (Y-axis direction), the second end portion 14B positioned at an end portion on the side opposite to the first end portion 14A, and the central portion 14C sandwiched therebetween, the hot cathode tube 17 is arranged in the central portion 14C, and a light source arrangement area LA is formed therein. Meanwhile, the hot cathode tube 17 is not arranged in each of the first end portion 14A and the second end portion 14B of the bottom plate 14a, and a light source non-arrangement area LN is formed therein. Specifically, the hot cathode tube 17 is eccentrically located in the central portion 14C in the short-side direction of the bottom plate 14a of the chassis 14 to thereby form the light source arrangement area LA. The area (the length dimension in the Y-axis direction) of the light source arrangement area LA is smaller than the area (the length dimension in the Y-axis direction) of the light source non-arrangement area LN. Further, the ratio of the area of the light source arrangement area LA (the length dimension in the Y-axis direction) to the entire screen area (the longitudinal dimension (short-side dimension) of the screen) is about 4%, for example. A pair of light source non-arrangement areas LN has substantially the same area.

In the central portion 14C (the light source arrangement area LA) of the chassis 14, a part (specifically, a central portion in the short-side direction) of the bottom portion 20a of the reflection sheet 20 overlaps in plan view. Meanwhile, in the first end portion 14A and the second end portion 14B (light source non-arrangement area LN), a part (specifically, both ends in the short-side direction) of the bottom portion 20a of the reflection sheet 20 and the each rising portion 20b overlap in plan view. That is, in the light source arrangement area LA, the principal part of the bottom portion 20a is arranged, while in the light source non-arrangement area LN, a part of both the end sides of the bottom portion 20a and the entire area of both the rising portions 20b are arranged. The hot cathode tube 17 is formed to have a length dimension substantially the same as the horizontal dimension (long-side dimension) of the screen.

The end portion of the hot cathode tube 17 and the holder 19 covering the socket 18 are made of synthetic resin in white color, and has an elongated, substantially box shape extending along the short-side direction of the chassis 14 as shown in FIG. 2. As shown in FIG. 4, the holder 19 has a step-like surface on which the optical member 15 or the liquid crystal panel 11 can be placed at different levels on the front surface side, and is arranged to partially overlap with each support plate 14c in the short-side direction of the chassis 14, thereby forming a side wall of the backlight unit 12 together with each support plate 14c. A insertion pin 24 projects from the surface of the holder 19 which is opposite to each support plate 14c of the chassis 14, and the insertion pin 24 is inserted into an insertion hole 25, which is formed in the upper surface of each support plate 14c of the chassis 14, thereby mounting the holder 19 to the chassis 14.

The first holding members 21 and the second holding members 22 are each made of synthetic resin (for example, made of polycarbonate), and the entire front surface thereof has a white-based color such as white, which is excellent for light reflectivity. As shown in FIG. 2, both the holding members 21 and 22 are arranged at positions (in a light source non-overlapping area LN) that overlap in plan view with each rising portion 20b of the reflection sheet 20 in the chassis 14. In addition, as shown in FIG. 3, both the holding members 21 and 22 are arranged to overlap with each other in plan view, and are arranged on the front side and the back side with each rising portion 20b interposed therebetween. This makes it possible to hold each rising portion 20b between the holding members 21 and 22.

More specifically, as shown in FIG. 5, two pairs of the holding members 21 and 22 are arranged at each of both the ends (both light source non-overlapping areas LN) excluding the central portion (light source overlapping area LA) in the short-side direction, and three pairs of the holding members 21 and 22 are arranged at each of the positions near the substantially central position and both the ends in the long-side direction, that is, six pairs in total are intermittently arranged in parallel in the chassis 14. Each pair of the holding members 21 and 22 is arranged in each light source non-arrangement area LN of the bottom plate 14a, and is arranged to overlap in plan view with each rising portion 20b of the reflection sheet 20. As shown in FIG. 3, the first holding member 21 is arranged on the back side of each rising portion 20b (on the side opposite to the light exit side), and the second holding member 22 is arranged on the front side of each rising portion 20b (light exit side). Further, each rising portion 20b is sandwiched between the first holding members 21 on the back side and the second holding members 22 on the front side and is retained. Moreover, the second holding members 22 arranged on the front side of each rising portion 20b have a function of holding each rising portion 20b with the first holding members 21, as well as a function of supporting the optical member 15 from the back side. Each pair of the holding members 21 and 22 is arranged at a substantially central position in the Y-axis direction of each rising portion 20b (light source non-arrangement area LN), that is, at a substantially intermediate position between the bottom portion 20a and each extending portion 20c. Specific configurations of the first holding members 21 and the second holding members 22 will be described in detail below.

As shown in FIG. 6, each first holding member 21 is interposed between each rising portion 20b and the bottom plate 14a and is arranged in the above-mentioned gap C, and thus it can be said that the first holding member 21 forms a receiving member for each rising portion 20b. The first holding member 21 includes a receiving portion 26 having a receiving surface 26a that receives a rising portion 20b on the back side (on the side opposite to the light exit side), a shaft portion 27 projecting from the receiving portion 26 toward the back side, a bottom plate pressing portion 28 which is provided at a projected distal end of the shaft portion 27 and presses the bottom plate 14a of the chassis 14 from the front side, and a mounting portion 29 which projects from the bottom plate pressing portion 28 toward the back side and is mounted to the bottom plate 14a.

The receiving portion 26 is formed in a rectangular shape in plan view. The long-side direction of the receiving portion coincides with the Y-axis direction, and the short-side direction thereof coincides with the X-axis direction (see FIGS. 6 and 7). As shown in FIG. 6, the receiving portion 26 has a substantially arcuate sectional shape taken along the Y-axis direction, and is formed to follow (in parallel with) the sectional shape of each rising portion 20b. Specifically, the receiving portion 26 has a bow-like shape which is warped (depressed or recessed) to the back side (bottom plate 14a side) in the range from the end portion on the side of the bottom portion 20a (hot cathode tube 17) to the end portion on the side opposite to the side of the bottom portion 20a with respect to the Y-axis direction. Note that, the explanation about the sectional shape of each receiving portion 26 is similar to that of each rising portion 20b, so a redundant explanation thereof is not repeated here. The dimension in the Y-axis direction of the receiving portion 26 is smaller than the dimension in the Y-axis direction of each rising portion 20b. Accordingly, the receiving portion 26 is configured to partially receive each rising portion 20b in the Y-axis direction (the direction from the bottom portion 20a to each rising portion 20b). The back side surface of the receiving portion 26 is substantially in parallel with the receiving surface 26a on the front side and has substantially the same plate thickness over the entire area of the receiving portion 26.

In the principal plate surface of each receiving portion 26, the principal plate surface on the front side opposite to each rising portion 20b is referred to as the receiving surface 26a. The curvature (curvature radius) of the receiving surface 26a is substantially constant and substantially the same as the curvature of each rising portion 20b. Accordingly, when each rising portion 20b is placed on the front side of each receiving portion 26, the entire area of the receiving surface 26a comes into contact with each rising portion 20b with almost no gap, thereby making it possible to receive each rising portion 20b from the back side in a surface-to-surface contact state. An angle formed by the receiving surface 26a with respect to the Y-axis direction is substantially the same as an angle (an acute angle which is an angle equal to or less than 45 degrees) formed by each rising portion 20b with respect to the Y-axis direction. Note that the angle formed by the receiving surface 26a with respect to the Y-axis direction refers to an angle formed by the tangential line on the receiving surface 26a with respect to the Y-axis direction. The receiving surface 26a intersects with each of the Y-axis direction (the direction perpendicular to the axis direction of the supporting portion 32 described later) and the Z-axis direction (the axis direction of the supporting portion 32 described later).

The shaft portion 27 has a columnar shape that projects from the principal plate surface (a surface opposite to the receiving surface 26a) on the back side of each receiving portion 26 toward the back side, and the axis direction coincides with the Z-axis direction. The bottom plate pressing portion 28 is in parallel with the bottom plate 14a and has a substantially straight plate shape along the X-axis direction and the Y-axis direction. The plate surface of the bottom plate pressing portion 28 intersects with the principal plate surface of each receiving portion 26. The bottom plate pressing portion 28 has a rectangular shape in plan view. The long-side direction and the short-side direction of the bottom plate pressing portion 28 are similar to those of each receiving portion 26, and have substantially the same size in plan view as each receiving portion 26. The substantially entire area of the bottom plate pressing portion 28 can come into contact with the front surface side of the bottom plate 14a.

A pair of the mounting portions 29 is provided at positions (positions sandwiching the shaft portions 27) which are spaced apart from each other in the long-side direction (Y-axis direction) in the bottom plate pressing portion 28. On the other hand, at each of mounting positions of the first holding members 21 on the bottom plate 14a of the chassis 14, a pair of mounting holes 14f through which the mounting portions 29 can be inserted is provided. These mounting portions 29 and the mounting holes 14f form a mounting structure (fixing structure) for fixing the first holding member 21 to the chassis 14 in a mounting state. The mounting portions 29 include a base portion 29a projecting from a bottom plate pressing portion 38 to the back side, and a pair of engaging portions 29b which is folded from a projecting end of the base portion 29a to the side of the bottom plate pressing portion 28. When the mounting portion 29 is inserted into the mounting hole 14f of the bottom plate 14a, both the engaging portions 29b are temporarily elastically deformed in the process of insertion. When the mounting portion 29 is fully inserted, both the engaging portions 29b are restored and the distal end portions thereof are engaged with the hole edges of the mounting holes 14f from the back side. This allows the first holding member 21 to be fixed (retained) to the chassis 14 in the mounting state. A pair of each of the mounting portions 29 and the mounting holes 14f is provided at the positions spaced apart from each other in plan view are provided, thereby preventing the first holding member 21 from rotating with respect to chassis 14.

Incidentally, the receiving portions 26 of the first holding members 21 are provided with fitting holes 30 that form a fitting-retaining structure for retaining the second holding member 22, which will be described later, in the mounting state. A pair of the fitting holes 30 is provided at positions spaced apart from each other in the long-side direction (Y-axis direction) in the receiving portions 26. The pair of fitting holes 30 is arranged side by side along the Y-axis direction at the positions sandwiching the shaft portions 27. The fitting holes 30 are formed to penetrate through the receiving portions 26 along the Z-axis direction.

As shown in FIG. 6, the second holding member 22 is arranged on the front side with each rising portion 20b interposed therebetween while overlapping with the first holding member 21 in plan view, and forms a pressing member for each rising portion 20b. The second holding member 22 includes a pressing portion 31 having a pressing surface 31a that presses each rising portion 20b from the front side (light exit side) ; the supporting portion 32 which projects from the pressing portion 31 to the front side and can support the optical member 15 from the back side; and fitting projections 33 which projects from the pressing portion 31 toward the back side and forms a fitting-retaining structure for retaining the first holding member 21 in the mounting state. The light reflectance on the front surface of a synthetic resin material forming the second holding member 22 is relatively higher than that of a synthetic resin material forming the first holding members 21. The light reflectance on the front surface of the second holding members 22 is equal to or slightly lower than the light reflectance on the front surface of the reflection sheet 20. The second holding members 22 as well as the reflection sheet 20 can effectively reflect the light within the chassis 14 to the front side.

As shown in FIG. 5, the pressing portion 31 is formed in a rectangular shape in plan view, as with the receiving portions 26. The long-side direction of the pressing portion coincides with the Y-axis direction and the short-side direction thereof coincides with the X-axis direction (see FIGS. 6 and 7). The size of the pressing portion 31 is substantially the same in plan view as the receiving portions 26, and almost the entire area thereof overlaps with the receiving portions 26 in plan view in the state where the second holding members 22 are mounted to the first holding members 21. As shown in FIG. 6, the sectional shape taken along the Y-axis direction of the pressing portion 31 has a substantially arcuate shape, and is formed to follow (in parallel with) the sectional shape of each rising portion 20b and the receiving portion 26. Specifically, the pressing portion 31 has a bow-like shape which is warped (depressed or recessed) to the back side (bottom plate 14a side) in the range from the end portion on the side of the bottom portion 20a (hot cathode tube 17) to the end portion on the side opposite to the bottom portion 20a with respect to the Y-axis direction. Note that the explanation of the sectional shape of the pressing portion 31 is similar to that of each rising portion 20b, so a redundant explanation thereof is not repeated here. The dimension in the Y-axis direction of the pressing portion 31 is smaller than the dimension in the Y-axis direction of each rising portion 20b. Accordingly, the pressing portion 31 partially presses each rising portion 20b in the Y-axis direction (in the direction from the bottom portion 20a toward each rising portion 20b). The front side surface of the pressing portion 31 is substantially in parallel with the pressing surface 31a on the back side, and the entire area of the pressing portion 31 has substantially the same plate thickness.

In the principal plate surface of the pressing portion 31, the principal plate surface on the back side opposite to each rising portion 20b is referred to as the pressing surface 31a. The curvature (curvature radius) of the pressing surface 31a is substantially constant and substantially the same as the curvature of each rising portion 20b and the receiving surface 26a. Accordingly, when the pressing portion 31 is placed on the front side of each rising portion 20b, the entire area of the pressing surface 31a comes into contact with each rising portion 20b with almost no gap, thereby making it possible to press each rising portion 20b from the front side in a surface-to-surface contact state. In this state, each rising portion 20b is sandwiched between the receiving portions 26 and the pressing portion 31, each of which has a shape following the outer shape, thereby retaining the shape in the state where inadvertent displacement of each of the front side and the back side is regulated. An angle formed by the pressing surface 31a with respect to the Y-axis direction is substantially the same as an angle formed by each rising portion 20b with respect to the Y-axis direction and an angle (acute angle which is equal to or less than 45 degrees) formed by the receiving surface 26a with respect to the Y-axis direction. Note that the angle formed by the pressing surface 31a with respect to the Y-axis direction refers to an angle formed by the tangential line of the pressing surface 31a with respect to the Y-axis direction. The pressing surface 31a intersects with each of the Y-axis direction (a direction orthogonal to the axis direction of the supporting portion 32 described later) and the Z-axis direction (the axis direction of the supporting portion 32 described later).

The supporting portion 32 projects from the surface on the front side of the pressing portion 31 (on the surface opposite to the pressing surface 31a) toward the front side, and the axis thereof crosses (penetrates) a space within the chassis 14 (a space retained between the diffuser plate 50 and the reflection sheet 20). The axis direction of the supporting portion 32 coincides with the Z-axis direction (a direction substantially orthogonal to the plate surface of the optical member 15). Accordingly, the axis of the supporting portion 32 and the plate surface of the diffuser plate 50 forms a substantial right angle. The supporting portion 32 has a conical shape. Specifically, the sectional shape taken along the X-axis direction and the Y-axis direction has a circular shape, and is formed into a tapered shape in which the diameter dimension gradually decreases from the projecting proximal end side toward the projecting distal end side. The projecting dimension of the supporting portion 32 is substantially equal to a distance from the front side surface of the pressing portion 31 to the back side surface of the diffuser plate 50 which is formed in a substantially straight state along the X-axis direction and the Y-axis direction. Accordingly, this supporting portion 32 comes into contact with the diffuser plate 50 in a substantially straight state. The projecting distal end portion, which is a portion in contact with the diffuser plate 50, of the supporting portion 32 is rounded. This supporting portion 32 has a dot shape within the plane of the optical member 15. This supporting portion 32 supports the optical member 15 from the back side, thereby making possible to regulate the positional relationship (distance, interval) in the Z-axis direction (a direction orthogonal to the plate surface of the optical member 15) of the optical member 15 (especially, the diffuser plate 50) and the hot cathode tube 17 to be constant. This allows the optical member 15 to exert desired optical functions stably.

A pair of the fitting projections 33 is provided at positions spaced apart from each other in the long-side direction (Y-axis direction) in the pressing portion 31, and can be fit into each fitting holes 30 of the corresponding first holding member 21. A pair of the fitting projections 33 is provided at positions spaced apart from each other in the long-side direction (Y-axis direction) of the pressing portion 31, and are arranged to overlap in plan view with each fitting hole 30 of the first holding member 21. The pair of fitting projections 33 is arranged side by side in the Y-axis direction at the positions sandwiching the shaft portions 27. These fitting projections 33 have a columnar shape projecting from the back side surface of the pressing portion 31 toward the back side along the Z-axis direction. A groove portion 33b is formed in the projecting distal end portion, thereby providing an engaging part 33a. The engaging part 33a has a cantilever shape, and is configured to be narrowed into the groove portion 33b and to be elastically deformable. On the outer surface on the side opposite to the side of the groove portion 33b in the engaging part 33a, an engaging projection 33c projecting to the outside is provided. The projecting dimension from the pressing portion 31 of the fitting projections 33 is greater than the sum of the thickness dimension of each rising portion 20b and the thickness dimension of the receiving portions 26. Accordingly, when the fitting projections 33 are fit into the fitting holes 30, the engaging part 33a is temporarily elastically deformed. In the state where the pressing surface 31a is brought into contact with each rising portion 20b, the projecting distal end portion of the fitting projections 33 penetrates through the receiving portions 26 and projects to the back side, and the engaging part 33a is elastically restored, with the result that the engaging projection 33c is engaged with the hole edge of the fitting holes 30 from the back side. This allows the second holding member 22 to be retained in the mounting state with respect to the first holding member 21. In this mounting state, displacement of the second holding member 22 to be separated from the first holding member 21 in the Z-axis direction is regulated by the engaging projection 33c, thereby achieving a retaining structure. That is, the interval between the receiving surface 26a and the pressing surface 31a is prevented from being increased from that in the mounting state, and the holding state with respect to each rising portion 20b can be maintained. Further, a pair of each of the fitting projections 33 and the fitting holes 30, which constitutes the fitting-retaining structure, is provided at positions spaced apart from each other in plan view, thereby preventing the first holding member 21 and the second holding member 22 from being rotated.

Note that each rising portion 20b has insertion holes 34 for inserting each fitting projections 33. A pair of the insertion holes 34 is provided to correspond to the mounting position of each second holding member 22 of each rising portion 20b. The size in plan view of the insertion holes 34 is slightly greater than that of the fitting projections 33, but is sufficiently smaller than that of the pressing portion 31.

Next, a configuration related to a light reflecting function of the diffuser plate 50 will be described in detail.

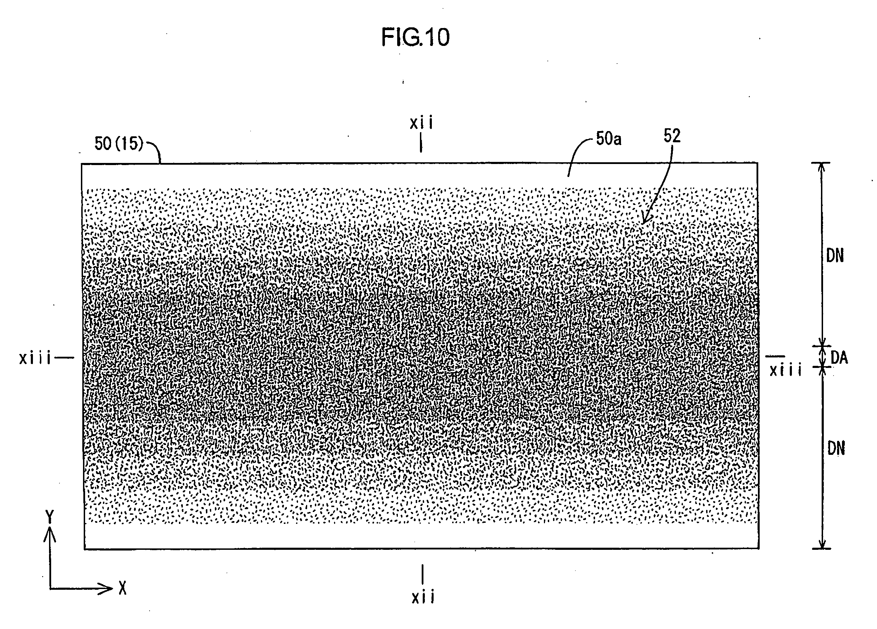

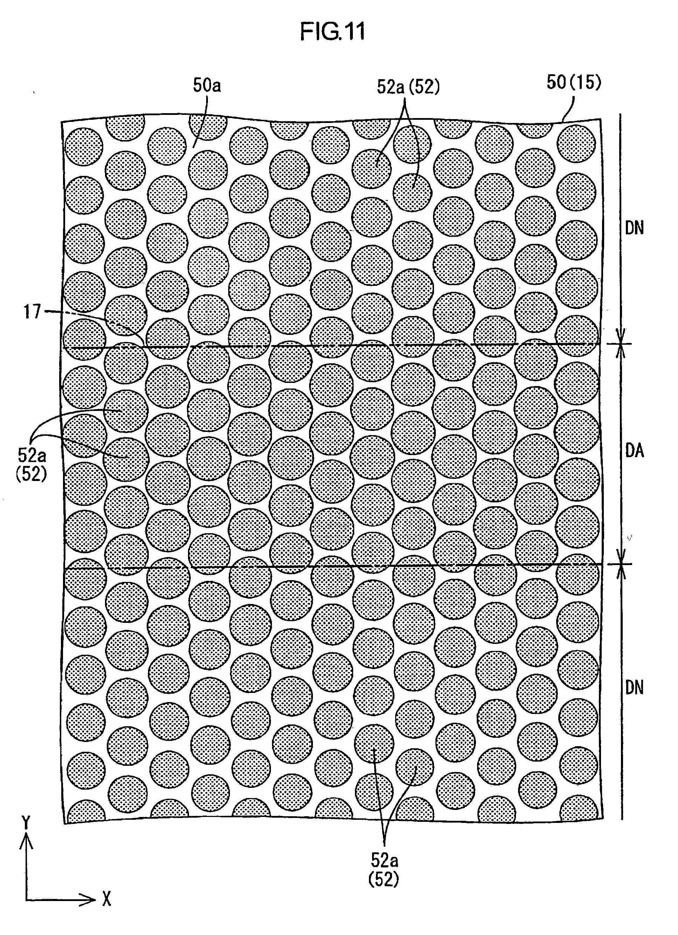

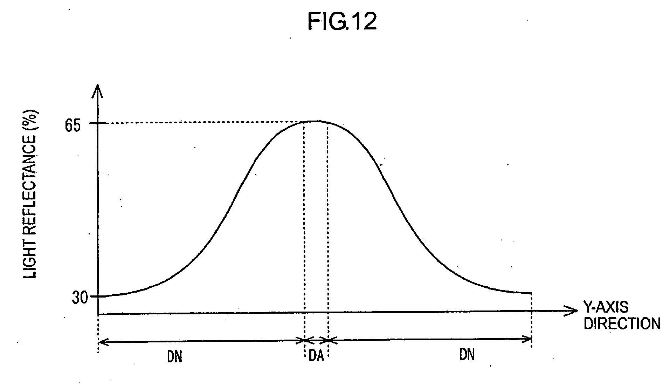

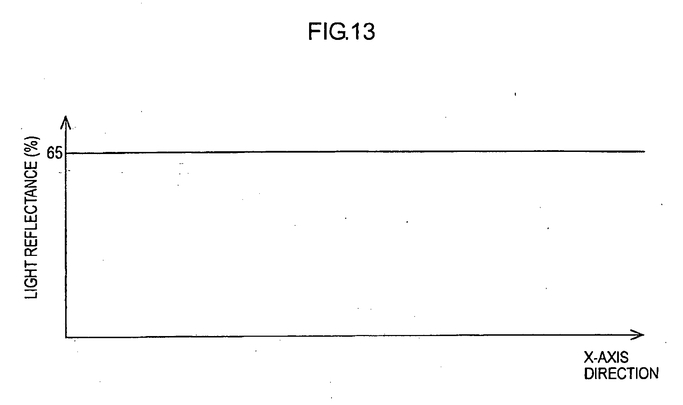

FIG. 10 is a plan view illustrating a light reflectance distribution in a diffuser plate. FIG. 11 is an enlarged plan view of a principal part showing a schematic configuration of a surface opposite to a hot cathode tube in the diffuser plate shown in FIG. 10. FIG. 12 is a graph showing a change in light reflectance in the short-side direction of the diffuser plate shown in FIG. 10. FIG. 13 is a graph showing a change in light reflectance in the long-side direction of the diffuser plate shown in FIG. 10. Note that in FIG. 12, the long-side direction of the diffuser plate is referred to as an X-axis direction and the short-side direction thereof is referred to as a Y-axis direction. Further, FIG. 12 is a graph in which a horizontal axis shows the Y-axis direction (short-side direction), and the light reflectance from a front-side end portion to a back-side end portion shown in FIG. 10 is plotted on the graph along the Y-axis direction. Similarly, FIG. 13 is a graph in which a horizontal axis shows the X-axis direction (long-side direction), and the light reflectance from a left-side end portion to a right-side end portion shown in FIG. 10 is plotted on the graph along the Y-axis direction.

The diffuser plate 50 is formed such that a predetermined amount of diffusing particles for diffusing light is distributed and blended in a base substrate made of a substantially transparent synthetic resin (for example, made of polystyrene), and the overall light transmittance and light reflectance are substantially uniform. Note that as specific examples of the light transmittance and light reflectance of the base substrate (base substrate excluding light reflecting portions 52 described later) of the diffuser plate 50, it is preferable that the light transmittance be about 70% and the light reflectance be about 30%, for example. The diffuser plate 50 has a surface opposite to the hot cathode tube 17 (hereinafter referred to as "first surface 50a") and a surface which is positioned on the side opposite to the first surface 50a and opposite to the liquid crystal panel 11 (hereinafter referred to as "second surface 50b"). As for these surfaces, the first surface 50a is a light entering surface into which the light from the hot cathode tube 17 side enters, and the second surface 50b is a light exit surface that outputs the light (illumination light) toward the liquid crystal panel 11.

As shown in FIGS. 10 and 11, the light reflecting portions 52 forming a dot pattern having white color are formed on the first surface 50a forming the light entering surface of the diffuser plate 50. The light reflecting portions 52 are formed by arranging a plurality of dots 52a each having a circular shape in plan view in a zig-zag shape (staggered shape, alternate shape) . The dot pattern forming the light reflecting portions 52 is formed by printing a paste containing metal oxide, for example, on the front surface of the diffuser plate 50. As printing means, screen printing, ink jet printing, or the like is suitably used. The light reflectance of each light reflecting portion 52 itself is about 75%, for example, which is greater than the light reflectance within the plane of the diffuser plate 50 of about 30%. In this embodiment, the light reflectance of each material is represented by an average light reflectance measured with a LAV of CM-3700d (diameter of measurement circle φ25.4 mm) manufactured by Minolta Co., Ltd. inside the measurement circle. Note that the light reflectance of each light reflecting portion 52 is measured in the following method. The light reflecting portions 52 are formed over the entire surface of a glass substrate and the light reflectance of the formed surface is measured according to the above measurement means.

The diffuser plate 50 has a long-side direction (X-axis direction) and a short-side direction (Y-axis direction). By changing the dot pattern of the light reflecting portions 52, the light reflectance of the first surface 50a opposite to the hot cathode tube 17 of the diffuser plate 50 is changed along the short-side direction as shown in FIG. 12 (see FIGS. 10 and 11). Specifically, as shown in FIG. 10, the diffuser plate 50 is configured such that the light reflectance of a portion overlapping with the hot cathode tube 17 (hereinafter referred to as "light source overlapping portion DA") is greater than the light reflectance of a portion which is not overlapping with the hot cathode tube 17 (hereinafter referred to as "light source non-overlapping portion DN" in the first surface 50a as a whole. Note that, as shown in FIG. 13, the light reflectance of the first surface 50a of the diffuser plate 50 is hardly changed along the long-side direction and is substantially constant (see FIG. 10).

The light reflectance distribution of the diffuser plate 50 will be described in detail. As shown in FIGS. 10 to 12, the light reflectance of the diffuser plate 50 continuously decreases in the direction away from the hot cathode tube 17 along the short-side direction, and continuously increases in the direction toward the hot cathode tube 17. The distribution is set as a normal distribution (bell-shaped curve). Specifically, the light reflectance of the diffuser plate 50 is maximum at the central position (a position matching the center of the hot cathode tube 17) in the short-side direction, and is minimum at both end positions in the short-side direction. The maximum value of the light reflectance is about 65%, for example, and the minimum value thereof is about 30%, which is equal to the light reflectance of the diffuser plate 50 itself. Accordingly, at both the end positions in the short-side direction of the diffuser plate 50, few or almost no light reflecting portion 52 is arranged.

Since the light reflectance distribution is set as described above, the light reflecting portions 52 are formed in the following manner. Specifically, among the dots 52a constituting the light reflecting portions 52, a dot coinciding with the central position in the short-side direction of the diffuser plate 50, that is, the central position of the hot cathode tube 17 has a maximum area. The areas of the dots 52a gradually decrease with distance, and a dot located at the outermost side in the short-side direction of the diffuser plate 50 is a minimum area. That is, the area of each dot 52a decreases with distance from the center of the hot cathode tube 17. According to the diffuser plate 50 configured as described above, the brightness distribution of the illumination light in the diffuser plate 50 as a whole can be made smooth. As a result, a smooth illumination brightness distribution can be achieved in the backlight unit 12 as a whole. Note that as means for adjusting the light reflectance, each dot 52a of the light reflecting portion 52 may have the same area, and the interval between the dots 52a may be changed.

This embodiment illustrates the configuration as described above. Subsequently, the operation of this embodiment will be described. The liquid crystal panel 11 and the backlight unit 12 are separately manufactured and assembled together using the bezel 13 or the like, thereby manufacturing the liquid crystal display device 10 as shown in FIGS. 3 and 4. In this process, the assembly operation upon manufacturing the backlight unit 12, especially, the operation of mounting each of the reflection sheet 20 and the holding members 21 and 22 in the chassis 14 will be described in detail.

First, after execution of the operation of mounting each first holding member 21 to the chassis 14 from the state shown in FIG. 2, the operation of laying the reflection sheet 20 in the chassis 14. After that, the operation of mounting each second holding member 22 to the corresponding first holding member 21 is carried out. Note that in the reflection sheet 20, each rising portion 20b is preliminarily bent with respect to the bottom portion 20a, and each extending portion 20c is bent with respect to each rising portion 20b at the stage prior to the mounting operation.

In the case of mounting the first holding member 21, a pair of mounting portions 29 and the corresponding pair of mounting holes 14f in the bottom plate 14a are aligned, and each mounting portion 29 is inserted into each mounting hole 14f. In the insertion process, both the engaging portions 29b of the mounting portions 29 are temporarily elastically deformed. When the first holding member 21 is pressed to the depth where the bottom portion pressing portion 28 comes into contact with the bottom plate 14a, as shown in FIG. 8, both the engaging portions 29b are elastically restored and the distal end portion is engaged with the hole edge of the mounting hole 14f from the back side. This allows the first holding member 21 to be retained in the mounting state with respect to the bottom plate 14a and fixed substantially immovably in any of the X-axis direction, the Y-axis direction, and the Z-axis direction. At this time, the first holding member 21 is inhibited from being rotated about the Z-axis with respect to the bottom plate 14a, thereby achieving a rotation-preventing structure.

After that, as shown in FIG. 9, when the reflection sheet 20 is housed in the chassis 14, the bottom portion 20a is received by the bottom plate 14a and each rising portion 20b is received by the receiving surface 26a of the each first holding member 21. Further, each extending portion 20c is received by each support plate 14c. This receiving surface 26a has an arcuate sectional shape having substantially the same curvature as that of each rising portion 20b, and comes into contact with each rising portion 20b with almost no gap in a surface-to-surface contact state. Accordingly, each rising portion 20b can be stably supported by the back side. At this time, each insertion holes 34 of each rising portion 20b is aligned with each fitting holes 30 in each first holding member 21 and brought into a communicating state.

Subsequently, the operation of mounting each second holding member 22 to each first holding member 21 is carried out. Upon execution of this operation, an operator can conduct the operation while gripping the supporting portion 32. During the mounting operation, a pair of the fitting projections 33 of the second holding member 22 and the corresponding pair of insertion holes 34 of the rising portion 20b (the corresponding pair of fitting holes 30 of the receiving portions 26) are aligned, and each fitting projections 33 is fit into each insertion hole 34 and each fitting hole 30. In the fitting process, the engaging part 33a of each fitting projection 33 is temporarily elastically deformed. When each second holding member 22 is pressed to the depth where the pressing surface 31a of the pressing portion 31 comes into contact with each rising portion 20b, as shown in FIG. 6, the engaging part 33a is elastically restored and the engaging projection 33c is engaged with the hole edge of the fitting holes 30 from the back side. This allows the second holding member 22 to be retained in the mounting state with respect to the first holding member 21 and fixed substantially immovably in any of the X-axis direction, the Y-axis direction, and the Z-axis direction. At this time, the second holding member 22 is inhibited from being rotated about the Z-axis with respect to the first holding member 21, thereby achieving a rotation-preventing structure.

As shown in FIGS. 6 and 7, in the state where both the holding members 21 and 22 are mounted, each rising portion 20b is held between the receiving portions 26 on the back side and the pressing portion 31 on the front side. Each of the receiving surface 26a and the pressing surface 31a has an arcuate sectional shape having substantially the same curvature as that of each rising portion 20b, and comes into contact with each rising portion 20b with almost no gap in a surface-to-surface contact state. Accordingly, each rising portion 20b is stably supported by the receiving surface 26a and the pressing surface 31a from the front side and the back side, and is retained with almost no displacement in each of the front side and the back side. As a result, the shape can be stably retained. In addition, since the second holding member 22 is stably retained in the mounting state by the fitting-retaining structure (the fitting holes 30 and the fitting projections 33) with respect to the first holding member 21, the relative positional relationship between the receiving surface 26a and the pressuring surface 31a, which hold each rising portion 20b, with respect to the Z-axis direction can be retained to be constant. This allows the holding state of the receiving surface 26a and the pressing surface 31a to be stably maintained with respect to each rising portion 20b. Though each of the holding members 21 and 22 has a size that partially holds each rising portion 20b in the Y-axis direction, each of the holding members 21 and 22 is provided at a substantially intermediate position in the Y-axis direction of each rising portion 20b, which makes it possible to appropriately retain the shape of each rising portion 20b.

After the reflection sheet 20 and each of the holding members 21 and 22 is mounted in the chassis 14 in the manner as described above, the hot cathode tube 17 mounted with the sockets 18 and the holder 19 are housed in the chassis 14. Then, the diffuser plate 50 and the optical sheet 41, which form the optical member 15, are sequentially mounted in the opening 14e and a frame 16 is also mounted, thereby completing the assembly of the backlight unit 12.

When the hot cathode tube 17 is turned on in the case of using the liquid crystal display device 10 manufactured as described above, the light emitted from the hot cathode tube 17 directly enters the first surface 50a of the diffuser plate 50, or indirectly enters the first surface 50a of the diffuser plate 50 after being reflected by each member (the holder 19, the reflection sheet 20, the second holding member 22, and the like) provided within the chassis 14. Then, after transmitting the diffuser plate 50, the light is output to the liquid crystal panel 11 through the optical sheet 41.

Here, borrowed light toward the diffuser plate 50 is light mainly reflected by the reflection sheet 20 laid on the substantially entire area within the chassis 14 (see FIGS. 2 and 5). As shown in FIGS. 3 and 6, each rising portion 20b provided in the light source non-arrangement area LN of the reflection sheet 20 has a rising form from the bottom portion 20a provided in the light source arrangement area LA to the front side. Accordingly, the interval from the diffuser plate 50, that is, the space in which light scatters in the chassis 14, gradually decreases from the rising proximal end side to the rising distal end side. The amount of light within the chassis 14 tends to be substantially reversely proportional to the distance from the hot cathode tube 17. The amount of light in the light source non-arrangement area LN tends to be smaller than that in the light source arrangement area LA. For this reason, dark spaces are liable to occur in the light source non-arrangement area LN. In this regard, according to this embodiment, in the light source non-arrangement area LN in which the amount of light tends to be small, the space in which light is scattered by each rising portion 20b is narrowed, and an angle is formed to direct the light reflected by each rising portion 20b toward the central side of the screen. This prevents the light source non-arrangement area LN from being viewed as a dark space. Further, the pressing portion 31 of the second holding member 22 has a size that partially presses each rising portion 20b in the short-side direction (Y-axis direction). Accordingly, as compared with the case where the rising portion is pressed over the overall length, downsizing can be achieved. Further, the ratio of the surface area to the inside area of the chassis 14 is smaller than that of the reflection sheet 20. Accordingly, even when the light reflectance of the reflection sheet 20 is different from that of the second holding member 22, unevenness in the light reflectance and reflected light in the chassis 14 hardly occurs.

Subsequently, the light reflecting function of the diffuser plate 50 will be described in detail. As shown in FIG. 10, on the first surface 50a of the diffuser plate 50 into which the light emitted from the hot cathode tube 17 enters, light reflecting portions 52 having different light reflectance within the plane for each area are formed, thereby making it possible to appropriately control the incidence efficiency of the light for each area. Specifically, in the light source overlapping portion DA overlapping with the hot cathode tube 17 on the first surface 50a, a large amount of direct light from the hot cathode tube 17 is present, and thus the amount of light is relatively larger than that in the light source non-overlapping portion DN. Accordingly, the light reflectance of the light reflecting portion 52 is set to be relatively large in the light source overlapping portion DA (see FIGS. 10 and 12), thereby making it possible to suppress (regulate) incidence of the light onto the first surface 50a and reflect and return a large amount of light into the chassis 14. Meanwhile, in the light source non-overlapping portion DN which does not overlap with the hot cathode tube 17 on the first surface 50a, the amount of direct light from the hot cathode tube 17 is small, and the amount of light is relatively smaller than that in the light source overlapping portion DA. Accordingly, the light reflectance of the light reflecting portion 52 in the light source non-overlapping portion DN is set to be relatively small (see FIGS. 10 and 12), thereby promoting the incidence of light onto the first surface 50a. At this time, in the light source non-overlapping portion DN, the light reflected within the chassis 14 by the light reflecting portion 52 of the light source overlapping portion DA is guided by the above-described reflection sheet 20 and the like, thereby supplementing the amount of light. Therefore, the amount of light entering the light source non-overlapping portion DN can be sufficiently secured.

Incidentally, when the hot cathode tube 17 is turned on or off, the temperature environment within the chassis 14 changes. Along with the change, the reflection sheet 20 provided within the chassis 14 is thermally expanded or thermally contracted. In the reflection sheet 20, the shape of the bottom portion 20a provided along the bottom plate 14a of the chassis 14 is relatively stably retained as shown in FIGS. 3 and 6. In each rising portion 20b, a rising form from the bottom portion 20a is formed and the gap C is retained with the bottom plate 14a, with the result that the shape is liable to be relatively unstable. Specifically, along with thermal expansion or thermal contraction of the reflection sheet 20, there is a possibility that warpage or bending occurs in each rising portion 20b and each rising portion 20b is deformed (displaced) so as to approach or separate from the diffuser plate 50. In this regard, according to this embodiment, each rising portion 20b is held by both the holding members 21 and 22. Thus, the deformation of each rising portion 20b so as to approach or separate from the diffuser plate 50 can be suppressed.

Specifically, each rising portion 20b is received by the receiving portion 26 of each first holding member 21 from the back side, and is pressed by the pressing portion 31 of each second holding member 22 from the front side, thereby retaining the state of being sandwiched from both the front side and the back side. Additionally, each of the receiving surface 26a of the receiving portion 26 and the pressing surface 31a of the pressing portion 31 has an arcuate sectional shape having substantially the same curvature as that of each rising portion 20b, and comes into contact with each rising portion 20b with almost no gap in a surface-to-surface contact state. Accordingly, the displacement of each rising portion 20b to each of the front side and the back side is suppressed, thereby making it possible to stably retain the shape of each rising portion 20b. Both the holding members 21 and 22 are configured to only partially press each rising portion 20b within the plane. However, a plurality of holding members 21 and 22 are dispersed and arranged within the plane of each rising portion 20b, which makes it possible to stably hold the entirety of each rising portion 20b. In this manner, the shape of each rising portion 20b can be stabilized, and thus the directivity of the light reflected by each rising portion 20b can be stabilized. Accordingly, unevenness in the light output to the outside of the backlight unit 12 after being irradiated on the diffuser plate 50 hardly occurs.

As described above, the backlight unit 12 in this embodiment includes: the hot cathode tube 17 serving as a light source; the chassis 14 which includes the bottom plate 14a provided on the side opposite to the light exit side with respect to the hot cathode tube 17 and which houses the hot cathode tube 17; the reflection sheet 20 which includes the bottom portion 20a provided along the bottom plate 14a and each rising portion 20b rising from the bottom portion 20a to the light exit side and which reflects light; the first holding member 21 which is provided on the side opposite to the light exit side with respect to each rising portion 20b and which is fixed to the chassis 14; and the second holding member 22 which is provided on the light exit side with respect to each rising portion 20b and which is configured to hold each rising portion 20b with the first holding member 21.

Each rising portion 20b of the reflection sheet 20 has a form rising from the bottom portion 20a to the light exit side. Accordingly, a fluctuation in the rising angle from the bottom portion 20a, and a deformation, such as warpage or bending, occurs, for example. Thus, the shape is liable to be unstable. In this regard, according to this embodiment, each rising portion 20b is held between the first holding member 21, which is provided on the side opposite to the light exit side with respect to each rising portion 20b and fixed to the chassis 14, and the second holding member 22 provided on the light exit side with respect to each rising portion 20b, thereby making it possible to regulate the displacement of each rising portion 20b to the light exit side and to the side opposite to the light exit side. This suppresses fluctuation in the rising angle of each rising portion 20b with respect to the bottom portion 20a and occurrence of a deformation, such as warpage or bending, in each rising portion 20b. That is, since the shape of each rising portion 20b can be stably retained, thereby stabilizing the directivity of the reflected light. Accordingly, unevenness in the light exited from the backlight unit 12 hardly occurs.

Further, the first holding member 21 has the receiving surface 26a that receives each rising portion 20b from the side opposite to the light exit side. Meanwhile, the second holding member 22 has the pressing surface 31a that presses each rising portion 20b from the light exit side. With this configuration, the receiving surface 26a of the first holding member 21 receives each rising portion 20b from the side opposite to the light exit side, while the pressing surface 31a of the second holding member 22 presses each rising portion 20b from the light exit side, thereby making it possible to stably retain the shape of each rising portion 20b.

At least one of the receiving surface 26a and the pressing surface 31a has a shape that follows each rising portion 20b. With this configuration, at least one of the receiving surface 26a and the pressing surface 31a has a shape that follows each rising portion 20b. Accordingly, it is possible to appropriately hold each rising portion 20b and provide an excellent shape stability.

At least one of the receiving surface 26a and the pressing surface 31a and each rising portion 20b have an arcuate sectional shape taken along the direction from the bottom portion 20a to each rising portion 20b. With this configuration, the shape of each rising portion 20b having an arcuate sectional shape can be appropriately retained by at least one of the receiving surface 26a and the pressing surface 31a which also have an arcuate shape.

At least one of the receiving surface 26a and the pressing surface 31a and each rising portion 20b have substantially the same curvature. With this configuration, at least one of the receiving surface 26a and the pressing surface 31a can be reliably brought into contact with each rising portion 20b, thereby providing an excellent shape stability of each rising portion 20b.

Each angle formed by at least one of the receiving surface 26a and the pressing surface 31a and each rising portion 20b with respect to the bottom portion 20a is an acute angle. With this configuration, an angle is formed based on the angle formed by the light reflected by each rising portion 20b with respect to the bottom portion 20a. The angle is set as an acute angle, thereby making it possible to favorably output the light. The shape of each rising portion 20b having an angle formed with respect to the bottom portion 20a as an acute angle can be appropriately retained by at least one of the receiving surface 26a and the pressing surface 31a which form an acute angle in the same manner.

The first holding member 21 and the second holding member 22 have the fitting-retaining structures (the fitting holes 30 and the fitting projections 33) that can retain the first holding member 21 and the second holding member 22 by fitting to each other. With this configuration, each fitting-retaining structure can retain each of the first holding member 21 and the second holding member 22, thereby providing an excellent shape stability of the rising portion 20b held between both the holding members 21 and 22.

At least a pair of fitting-retaining structures is provided at positions spaced apart from each other in plan view. With this configuration, the fitting-retaining structures prevent rotation of the first holding member 21 and the second holding member 22 thus retained.

The fitting-retaining structures include the fitting projections 33 which are provided on the first holding member 21 and which project to the side opposite to the light exit side, and the fitting holes 30 (fitting recessed portion) that are provided on the second holding member 22 and can receive the fitting projections 33. With this configuration, the fitting projections 33 of the first holding member 21 can be respectively fit to the fitting holes 30 of the second holding member 22, thereby making it possible to suitably retain both the holding members 21 and 22.

Further, each rising portion 20b is provided with the insertion holes 34 through which the fitting-retaining structures can be inserted. With this configuration, the fitting-retaining structures are inserted into the insertion holes 34, thereby allowing the second holding member 22 to be mounted on the first holding member 21.

Further, there is provided the optical member 15 which is arranged on the light exit side with respect to the hot cathode tube 17, and the second holding member 22 has an axis crossing the space within the chassis 14. There is provided the supporting portion 32 that supports the optical member 15 from the side opposite to the light exit side. This configuration enables the second holding member 22 to have a function of supporting the optical member 15 from the side opposite to the light exit side.

The axis direction of the supporting portion 32 is a direction substantially orthogonal to the plate surface of the optical member 15. With this configuration, the supporting portion 32 can appropriately support the optical member 15. This prevents the supporting portion 32 from being viewed as a dark space through the optical member 15, and is suitable for suppression of the uneven brightness.

The light reflectance on the front surface of the second holding member 22 is higher than that of the first holding member 21. With this configuration, the light can be efficiently reflected on the front surface of the second holding member 22 provided on the light exit side with respect to each rising portion 20b, thereby making it possible to retain a high light use efficiency. Furthermore, the light reflectance on the front surface of the first holding member 21 provided on the side opposite to the light exit side with respect to each rising portion 20b is lower than that of the second holding member 22, thereby facilitating reduction in manufacturing cost associated with the first holding member 21.

The second holding member 22 is formed to partially hold each rising portion 20b in the direction from the bottom portion 20a toward each rising portion 20b. With this configuration, in comparison with the case where the second holding member 22 holds each rising portion 20b over the overall length, the second holding member 22 can be downsized. Accordingly, the ratio of the surface area of the second holding member 22 to the surface area of the reflection sheet 20 can be decreased. Therefore, even when the light reflectance of the reflection sheet 20 is different from that of the second holding member 22, unevenness of the light reflectance within the chassis 14 hardly occurs.

The end portions of the bottom plate 14a are provided with the side plates 14b each rising to the light exit side, and the outwardly overhanging support plates 14c are provided at the rising ends of the side plates 14b, meanwhile, each extending portions 20c extending along each support plate 14c is provided at the rising end of each rising portion 20b. With this configuration, the bottom portion 20a of the reflection sheet 20 is provided along the bottom plate 14a, and each extending portion 20c is provided along each support plate 14c. This makes it possible to further stabilize the shape of each rising portion 20b which is positioned between the bottom portion 20a and each extending portion 20c.

The chassis 14 is partitioned into the light source arrangement area LA in which the hot cathode tube 17 is provided, and the light source non-arrangement area LN in which the hot cathode tube 17 is not arranged. With this configuration, the light source non-arrangement area LN in which the hot cathode tube 17 is not arranged is set in the chassis 14, thereby reducing the number of the hot cathode tubes 17, as compared to the case where the hot cathode tubes 17 are evenly arranged in the entire chassis 14. As a result a reduction in cost and power saving of the backlight unit 12 can be achieved.

The chassis 14 is partitioned into at least the first end portion 14A, the second end portion 14B positioned at the end portion on the side opposite to the first end portion 14A, and the central portion 14C sandwiched between the first end portion 14A and the second end portion 14B. Among these portions, the central portion 14C is used as the light source arrangement area LA, and the first end portion 14A and the second end portion 14B are used as the light source non-arrangement area LN. With this configuration, sufficient brightness can be secured in the central portion of the backlight unit 12, and the brightness of the display central portion of the liquid crystal display device 10 including the backlight unit 12 can also be secured, thereby obtaining favorable visibility.

At least a part of the bottom portion 20a is provided in the light source arrangement area LA, while at least a part of the rising portion 20b is provided in the light source non-arrangement area LN. The amount of light within the chassis 14 tends to be smaller in the light source non-arrangement area LN than in the light source arrangement area LA. However, provision of the rising portion 20b rising from the bottom portion 20a to the light exit side in the light source non-arrangement area LN can prevent generation of a dark space in the light source non-arrangement area LN. This makes it possible to suppress the uneven brightness.

There is further provided the optical member 15 provided on the light exit side with respect to the hot cathode tube 17. In the diffuser plate 50 serving as the optical member 15, the light reflectance on the first surface 50a opposite to at least the hot cathode tube 17 side in a portion overlapping with the light source non-arrangement area LN (the light source non-overlapping portion DN) is larger than that in a portion overlapping with the light source arrangement area LA (the light source overlapping portion DA). With this configuration, the light emitted from the hot cathode tube 17 first reaches the portion having a relatively large light reflectance in the optical member 15. Accordingly, most part of the light is reflected (that is, the light is not transmitted), and the brightness of the illumination light with respect to the amount of light emitted from the hot cathode tube 17 is suppressed. Meanwhile, the reflected light can be reflected within the chassis 14 and can reach the light source non-arrangement area LN. In the optical member 15, the portion overlapping with the light source non-arrangement area LN has a relatively small light reflectance, and thus a larger amount of light is transmitted. Therefore, a predetermined brightness of illumination light can be obtained.

The diffuser plate 50 is configured such that the light reflectance on the first surface 50a opposite to at least the hot cathode tube 17 side decreases in the direction away from the hot cathode tube 17. With this configuration, the brightness of illumination light in the light source arrangement area LA and the light source non-arrangement area LN can be made uniform.

The front surface of the second holding member 22 has white color. With this configuration, light can be favorably reflected on the front surface of the second holding member 22 provided on the light exit side with respect to the rising portion 20b. Accordingly, the light emitted from the hot cathode tube 17 can be effectively utilized.

The light source is formed of the hot cathode tube 17. With this configuration, an increase in brightness, for example, can be achieved.

Though the first embodiment of the present invention has been described above, the present invention is not limited to the above embodiment. The present invention can include modified examples as described below, for example. Note that in each of the following modified examples, the same components as those of the above-described embodiment are denoted by the same reference numerals as those of the embodiment, and the illustration and description thereof are not repeated as needed.

### <First modified example of the first embodiment>

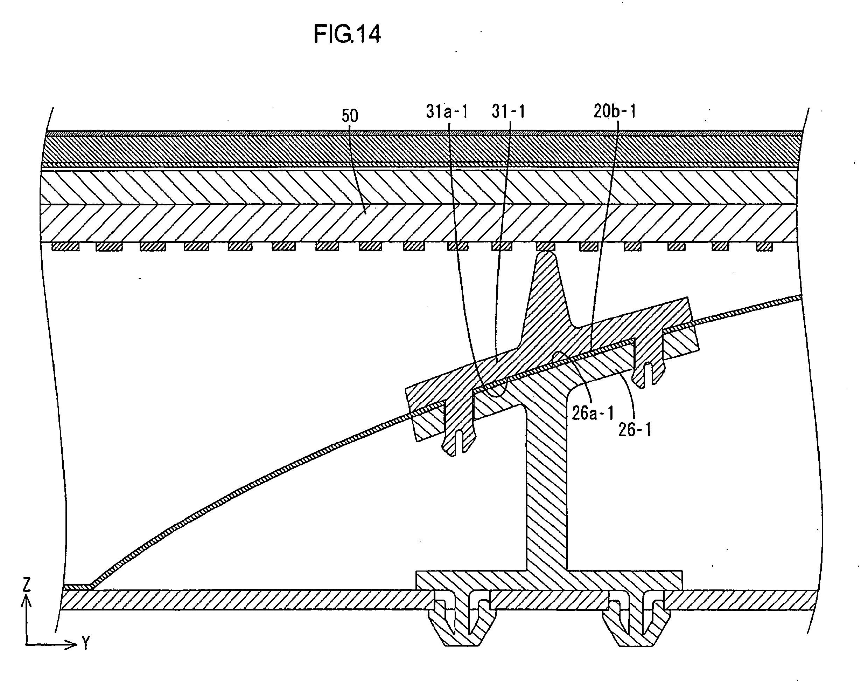

A first modified example of the first embodiment will be described with reference to FIG. 14. This example illustrates a configuration in which the shape of each of a rising portion 20b-1, a receiving portion 26-1, and a pressing portion 31-1 is changed. FIG. 14 is an enlarged sectional view of a principal part of each of the holding members and the reflection sheet according to this modified example.

As shown in FIG. 14, the sectional shape taken along the Y-axis direction of the rising portion 20b-1 is a substantially arcuate shape which is a bow-like shape warped to the front side in a range from the rising proximal end to the rising distal end. That is, the rising portion 20b-1 has a form entirely projecting (swelling) toward the diffuser plate 50 side (light exit side) with respect to a line (chord) connecting the rising proximal end and the rising distal end. In other words, a space retained between the rising portion 20b-1 and the diffuser plate 50 is narrowed by the amount of projection on the diffuser plate 50 side, as compared to the case where the rising portion is formed into a straight, inclined shape (slope shape) from the rising proximal end to the rising distal end. Each rising portion 20b-1 has a substantially constant curvature (curvature radius). Meanwhile, the receiving portions 26-1 and the pressing portion 31-1 are each formed to have a shape that follows (in parallel with) the sectional shape taken along the Y-axis direction of the above-described rising portion 20b-1, and have the substantially same curvature. Accordingly, a receiving surface 26a-1 of the receiving portions 26-1 and a pressing surface 31a-1 of the pressing portion 31-1 can hold the rising portion 20b-1 in a surface-to-surface contact state. Note that, the explanation of the sectional shape of each of the receiving portion 26-1 and the pressing portion 31-1 is similar to that of the rising portion 20b-1, so a redundant explanation thereof is not repeated here.

### <Second modified example of the first embodiment>

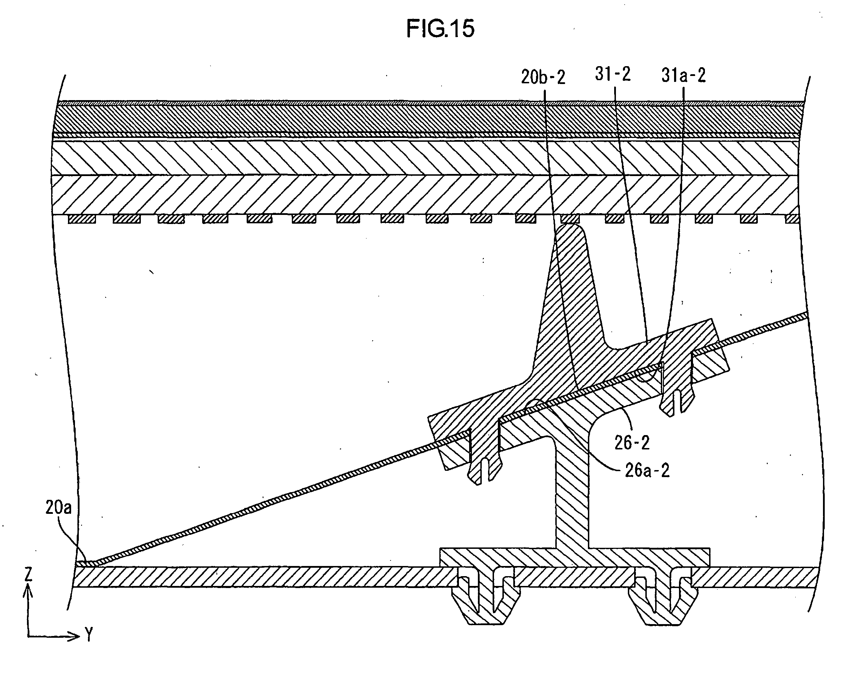

A second modified example of the first embodiment will be described with reference to FIG. 15. This example illustrates a configuration in which the shape of each of a rising portion 20b-2, a receiving portion 26-2, and a pressing portion 31-2 is changed. FIG. 15 is an enlarged sectional view of a principal part of each of the holding members and the reflection sheet according to this modified example.

As shown in FIG. 15, the sectional shape taken along the Y-axis direction of the rising portion 20b-2 is an inclined shape with respect to the bottom portion 20a. Specifically, the rising portion 20b-2 has a inclined shape (slope shape) with a constant slope (inclination angle) from the rising proximal end to the rising distal end, and the plate surface thereof is inclined with respect to each of the Y-axis direction (the plate surface of the bottom portion 20a) and the Z-axis direction. The inclination angle (an angle formed with respect to the Y-axis direction) with respect to the plate surface of the bottom portion 20a of the rising portion 20b-2 is preferably an acute angle (an angle equal to or less than 90 degrees), and more preferably, an angle equal to or less than 45 degrees. Specifically, the angle is about 20 degrees to 30 degrees, for example. Meanwhile, each of the receiving portion 26-2 and the pressing portion 31-2 has a form that follows (in parallel with) the sectional shape taken along the Y-axis direction of the above-described rising portion 20b-2. Each inclination angle formed by each of the receiving portion 26-2 and the pressing portion 31-2 with respect to the Y-axis direction is substantially the same. Accordingly, a receiving surface 26a-2 of the receiving portion 26-2 and a pressing surface 31a-2 of the pressing portion 31-2 can hold the rising portion 20b-2 in a surface-to-surface contact state. Note that the explanation of the sectional shape of each of the receiving portion 26-2 and the pressing portion 31-2 is similar to that of the rising portion 20b-2, so a redundant explanation thereof is not repeated here.

### <Third modified example of the first embodiment>

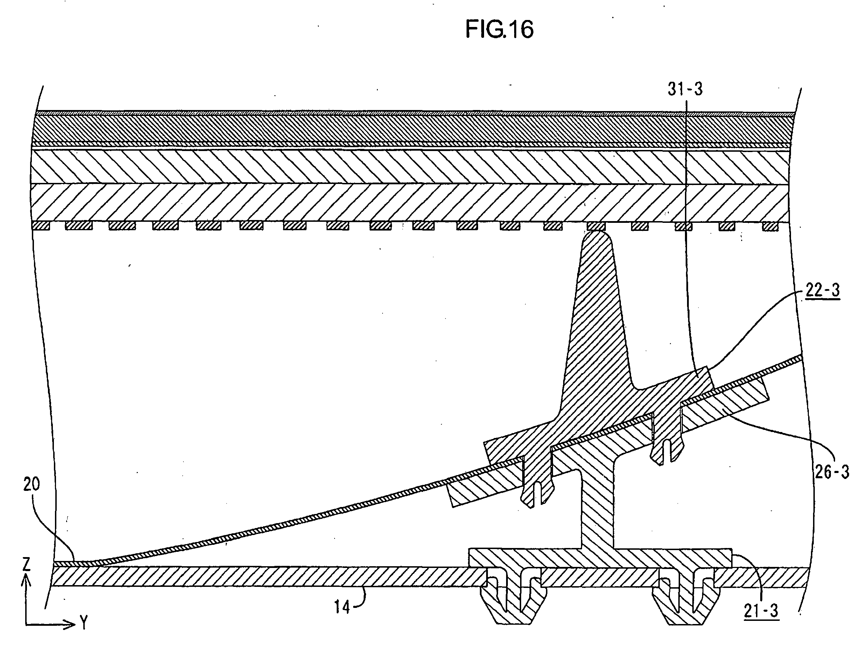

A third modified example of the first embodiment will be described with reference to FIG. 16. This embodiment illustrates a configuration in which the relative size between a first holding member 21-3 and a second holding member 22-3 is changed. FIG. 16 is an enlarged sectional view showing a principal part of each of both the holding members and the reflection sheet according to this modified example.

As shown in FIG. 16, a receiving portion 26-3 of the first holding member 21-3 and a pressing portion 31-3 of the second holding member 22-3 are set to have different sizes in plan view. Specifically, the size in plan view (the dimension in the Y-axis direction and the dimension in the X-axis direction) of the pressing portion 31-3 is relatively smaller than that of the receiving portion 26-3. This pressing portion 31-3 is a portion exposed to the front side together with the supporting portion 32 in the second holding member 22-3. Accordingly, if the pressing portion 31-3 is downsized, the surface area at the portion exposed to the front side in the second holding member 22-3 can be decreased. This contributes to a reduction in the ratio of the surface area of the second holding member 22-3 to the surface area of the reflection sheet 20.

According to this modified example described above, the size in plan view of the second holding member 22-3 is smaller than that of the first holding member 21-3. With this configuration, as compared to the case where the size in plan view of the second holding member is set to be equal to that of the first holding member 21-3, the ratio of the surface area of the second holding member 22-3 to the surface area of the reflection sheet 20 can be decreased. Accordingly, even when the light reflectance of the reflection sheet 20 is different from that of the second holding member 22-3, unevenness of the light reflectance within the chassis 14 hardly occurs.

### <Fourth modified example of the first embodiment>

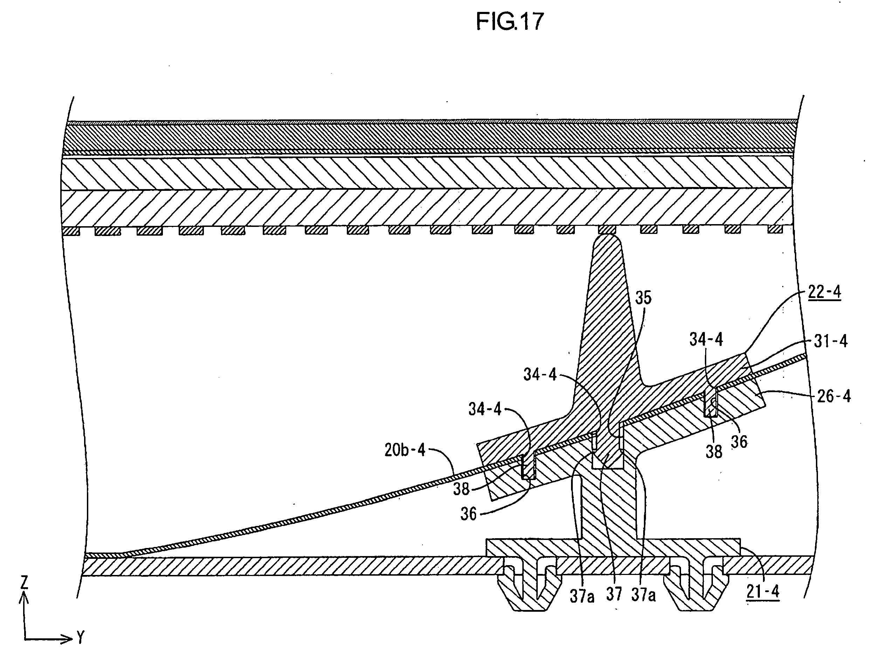

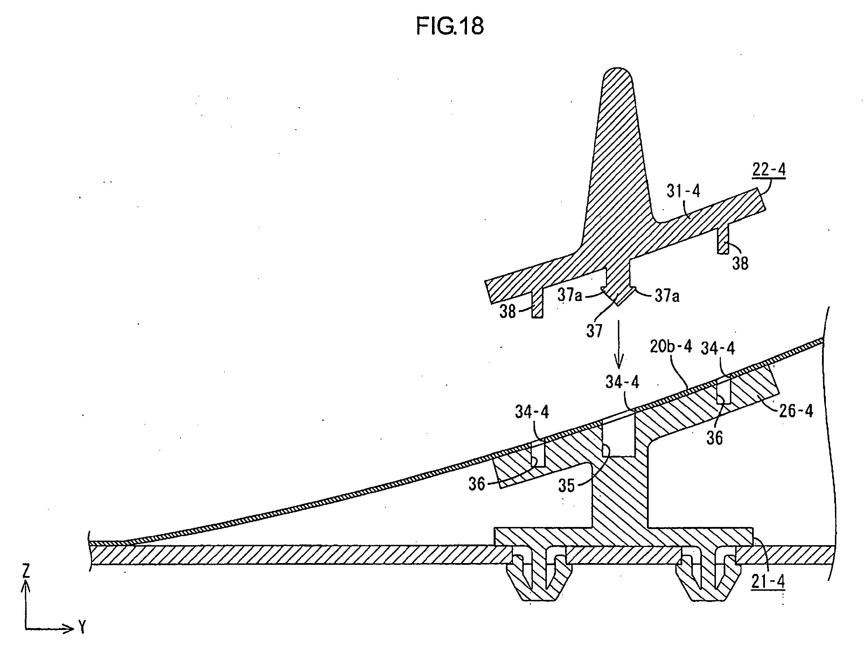

A fourth modified example of the first embodiment will be described with reference to FIG. 17 or 18. This example illustrates a modified fitting-retaining structure. FIG. 17 is an enlarged sectional view of a principal part of each of the holding members and the reflection sheet according to this modified example. FIG. 18 is an enlarged sectional view of the principal part showing the state before the second holding member is mounted.

As shown in FIG. 18, a receiving portion 26-4 of a first holding member 21-4 is provided with a fitting recess 35 forming the fitting-retaining structure. The fitting recess 35 is provided at a substantially central position of the receiving portion 26-4, and has a form opened substantially straight toward the front side along the Z-axis direction. The receiving portion 26-4 is provided with a pair of rotation-preventing recesses 36 opened to the front side at positions sandwiching the fitting recess 35 in the Y-axis direction. Meanwhile, a pressing portion 31-4 of a second holding member 22-4 is provided with a single fitting protrusion 37 which can be fit into the fitting recess 35 and forms a fitting-retaining structure. A retaining projection 37a projects at the projecting distal end portion of the fitting projection 37. Further, the pressing portion 31-4 is provided with a pair of rotation-preventing projections 38 at positions sandwiching the fitting protrusion 37 in the Y-axis direction. Note that rising portions 20b-4 are provided with insertion holes 34-4 for inserting the fitting protrusion 37 and the rotation-preventing projections 38.

When the first holding member 21-4 is mounted to the second holding member 22-4 from the state shown in FIG. 18, the fitting protrusion 37 and the rotation-preventing projections 38 are inserted into the insertion holes 34-4 as shown in FIG. 17, and are then fit into the corresponding fitting recess 35 and rotation-preventing recess 36. At this time, when the retaining projection 37a is dig into the inner surface of the fitting recess 35, thereby maintaining the second holding member 22-4 with respect to the first holding member 21-4 in the retaining state. Further, the both rotation-preventing projections 38 and the both rotation-preventing recesses 36 are fit to each other to thereby retain the second holding member 22-4 to be prevented from being rotated with respect to the first holding member 21-4.

### <Fifth modified example of the first embodiment>

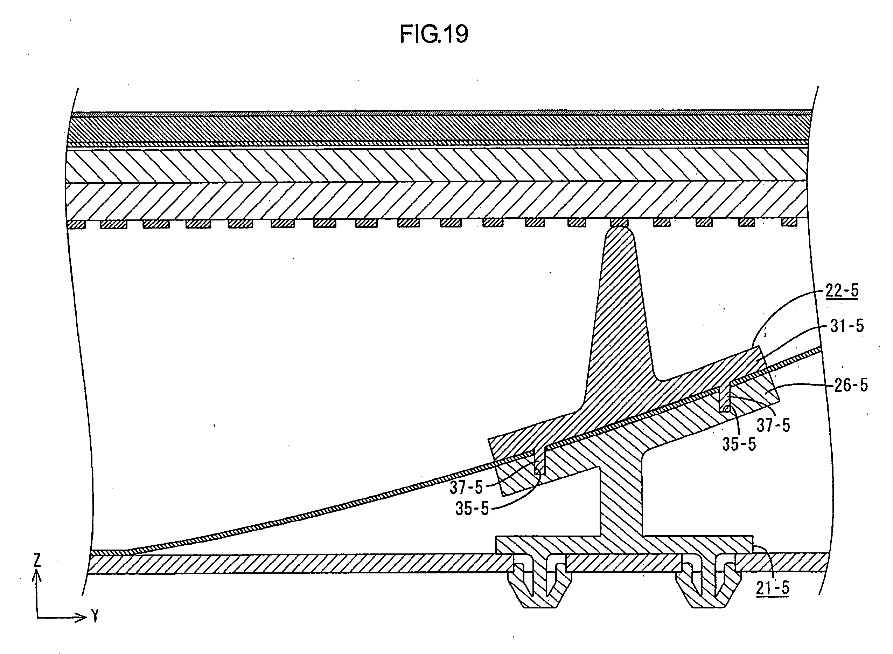

A fifth modified example of the first embodiment will be described with reference to FIG. 19. This example illustrates a configuration in which the fitting-retaining structure is modified. FIG. 19 is an enlarged sectional view of a principal part of each of the holding members and the reflection sheet according to this modified example.

As shown in FIG. 19, in a receiving portion 26-5 of a first holding member 21-5, a pair of fitting recesses 35-5 forming the fitting-retaining structure is provided. The fitting recesses 35-5 are provided at positions spaced apart from each other in the Y-axis direction in the receiving portion 26-5. Meanwhile, in a pressing portion 31-5 of a second holding member 22-5, a pair of fitting protrusions 37-5 which can be fit into each fitting recess 35-5 and form a fitting-retaining structure is provided. The entire size of the fitting protrusions 37-5 is equal to or slightly greater than that of the fitting recesses 35-5, and thus the fitting protrusions 37-5 are fit into the fitting recesses 35-5 in a press-fit manner. Accordingly, in the state where the fitting protrusions 37-5 are fit into the fitting recesses 35-5, a frictional force generated therebetween can maintain the second holding member 22-5 with respect to the first holding member 21-5 in the retaining state.

### <Sixth modified example of the first embodiment>

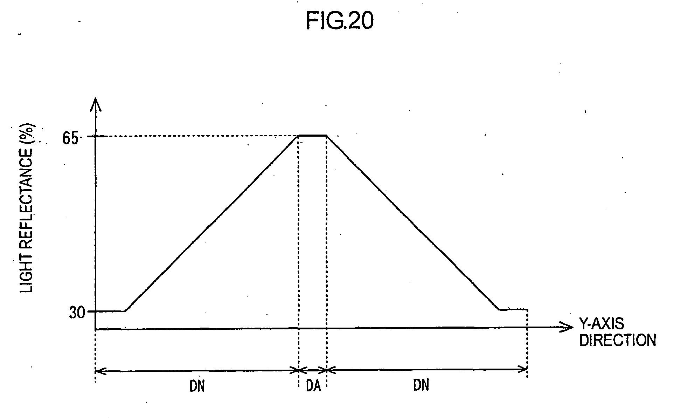

A sixth modified example of the first embodiment will be described with reference to FIG. 20. This example shows a configuration in which the light reflectance distribution in the first surface 50a of the diffuser plate 50 is changed. FIG. 20 is a graph showing a change in light reflectance in the short-side direction of a diffuser plate according to this modified example.

On the first surface 50a of the diffuser plate 50, as shown in FIG. 20, the light source overlapping portion DA has a substantially uniform light reflectance of 65%, for example, which indicates a maximum value within the diffuser plate 50. Meanwhile, the light reflectance in the light source non-overlapping portion DN continuously and gradually decreases (changes into a slope shape) outward from the side close to the light source overlapping portion DA, and indicates a minimum value of 30% at both ends in the short-side direction (Y-axis direction) of the diffuser plate 50. The dots 52a forming the light reflecting portions 52 have a maximum area and are uniformly formed in the light source overlapping portion DA. Meanwhile, in the light source non-overlapping portion DN, the dots are formed to continuously and gradually decrease in inversely proportional to the distance from the light source overlapping portion DA.

### <Seventh modified example of the first embodiment>

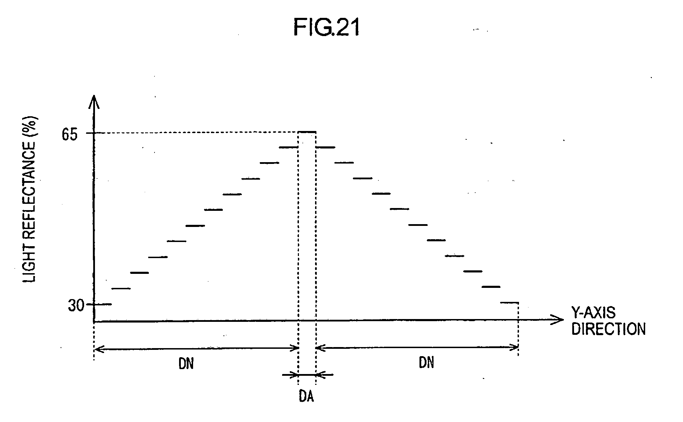

A seventh modified example of the first embodiment will be described with reference to FIG. 21. This example illustrates a configuration in which the light reflectance distribution in the first surface 50a of the diffuser plate 50 is further changed. FIG. 21 is a graph showing a change in light reflectance in the short-side direction of a diffuser plate according to this modified example.

As shown in FIG. 21, the light reflecting portions 52 are each formed such that the light reflectance within the first surface 50a of the diffuser plate 50 gradually decreases stepwise from the light source overlapping portion DA to the light source non-overlapping portion DN. Specifically, the dots 52a forming the light reflecting portions 52 have a maximum area (light reflectance) and are uniformly formed in the light source overlapping portion DA. Meanwhile, the dots are formed to gradually decrease stepwise for each area in the direction away from the light source overlapping portion DA, and are smallest at both ends in the short-side direction (Y-axis direction) of the diffuser plate 50. That is, the light reflectance in the light source non-overlapping portion DN of each light reflecting portions 52 changes into a stripe shape along the short-side direction (Y-axis direction) of the diffuser plate 50. This configuration allows the brightness distribution of the illumination light exited from the diffuser plate 50 to be smooth. Furthermore, according to means for forming a plurality of areas having different light reflectance stepwise, the method for manufacturing the diffuser plate 50 can be simplified, which contributes to a reduction in cost.

### <Second embodiment>

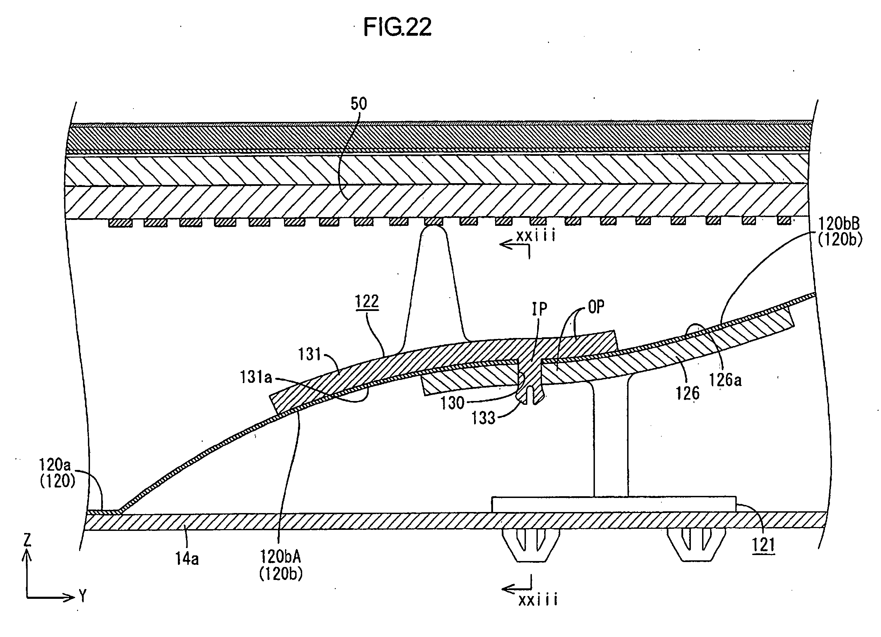

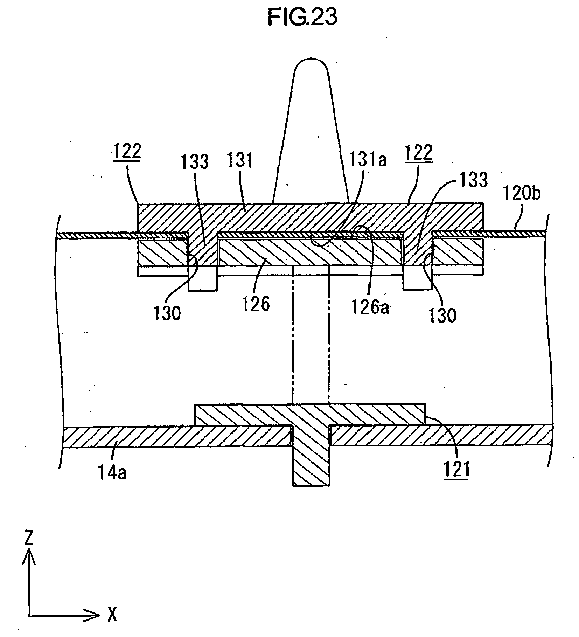

A second embodiment of the present invention will be described with reference to FIG. 22 or 23. The second embodiment illustrates a configuration in which the shape of each of a rising portion 120b, a receiving portion 126, and a pressing portion 131 is changed. Note that a redundant explanation of the same components, operations, and effects as those of the above-described first embodiment is not repeated here. FIG. 22 is an enlarged sectional view of a principal part of each of the holding members and the reflection sheet. FIG. 23 is a sectional view taken along the line xxiii-xxiii of FIG. 22.

As shown in FIG. 22, the sectional shape taken along the Y-axis direction of the rising portion 120b of a reflection sheet 120 is a curved shape having an inflection point IP at a middle portion. Specifically, the rising portion 120b can be partitioned into a first portion 120bA on the rising proximal end side (on the side of a bottom portion 120a side, or on the left side shown in FIG. 22) with the inflection point IP interposed therebetween, and a second portion 120bB on the rising distal end side (on the extending portion side, or on the right side shown in FIG. 22). Among these portions, the sectional shape taken along the Y-axis direction of the first portion 120bA is a substantially arcuate shape warped to the front side, and has a form projecting (swelling) to the diffuser plate 50 side (light exit side) with respect to a line (chord) connecting the rising proximal end and the rising distal end. Meanwhile, the sectional shape taken along the Y-axis direction of the second portion 120bB is a substantially arcuate shape warped to the back side, and has a form depressed (recessed) to the bottom plate 14a side (the side opposite to the light exit side) with respect to the line (chord) connecting the rising proximal end and the rising distal end. A connecting portion (a portion having the inflection point IP) between the first portion 120bA and the second portion 120bB has a substantially straight shape along the Y-axis direction.

A first holding member 121 and a second holding member 122 partially overlap with each other in plan view, and are provided at positions shifted from each other with respect to the Y-axis direction. Specifically, the principal part of the first holding member 121 is provided on the side (on the end in the short-side direction of the reflection sheet 120) opposite to the side of the bottom portion 120a with respect to the inflection point IP in the rising portion 120b, and is provided to mainly overlap in plan view with the second portion 120bB of the rising portion 120b. The sectional shape taken along the Y-axis direction of the receiving portion 126 (a receiving surface 126a) has a shape that follows (in parallel with) the second portion 120bB of the rising portion 120b, and the curvature thereof is substantially the same. Meanwhile, the principal part of the second holding member 122 is provided on the side of the bottom portion 120a (on the center side in the short-side direction of the reflection sheet 120) with respect to the inflection point IP in the rising portion 120b, and is provided to mainly overlap in plan view with the first portion 120bA of the rising portion 120b. The sectional shape taken along the Y-axis direction of the pressing portion 131 (a pressing surface 131a) is a shape that follows (in parallel with) the first portion 120bA of the rising portion 120b, and the curvature thereof is substantially the same. An end portion on the bottom portion 120a side of the receiving portion 126 and an end portion on the side opposite to the bottom portion 120a side of the pressing portion 131 are provided to overlap with each other in plan view. An overlapping portion OP also overlaps, in plan view, with the connecting portion (the portion including the inflection point IP) between the first portion 120bA and the second portion 120bB. That is, the connecting portion of the rising portion 120b can be held in the overlapping portion OP between the receiving portion 126 and the pressing portion 131.

In the overlapping portion OP on the side of the receiving portion 126, fitting holes 130 are formed in a form penetrating in the plate thickness direction. As shown in FIG. 23, a pair of the fitting holes 130 is provided at positions spaced apart from each other in the X-axis direction of the receiving portion 126. Meanwhile, in the overlapping portion OP on the side of the pressing portion 131, fitting projections 133 which can be fit into the fitting holes 130 are provided to project toward the back side. A pair of the fitting projections 133 is provided at positions spaced apart from each other in the X-axis direction of the pressing portion 131. The fitting-retaining structure formed by the fitting projections 133 and the fitting holes 130 allows the first holding member 121 and the second holding member 122 to be retained in the mounting state.

According to this embodiment described above, the sectional shape taken along the direction from the bottom portion 120a to the rising portion 120b of the rising portion 120b is a curved shape having the inflection point IP at a middle portion. Further, in the rising portion 120b, the first holding member 121 is provided on one side and the second holding member 122 is provided on the other side with the inflection point IP interposed therebetween, and both the holding members 121 and 122 are provided to partially overlap with each other in plan view. This configuration allows the rising portion 120b, which has a complicated sectional shape including the inflection point IP, to be provided at positions sandwiching the inflection point IP, and allows the first holding member 121 and the second holding member 122, which partially overlap with each other in plan view, to be suitably held.

### <Third embodiment>

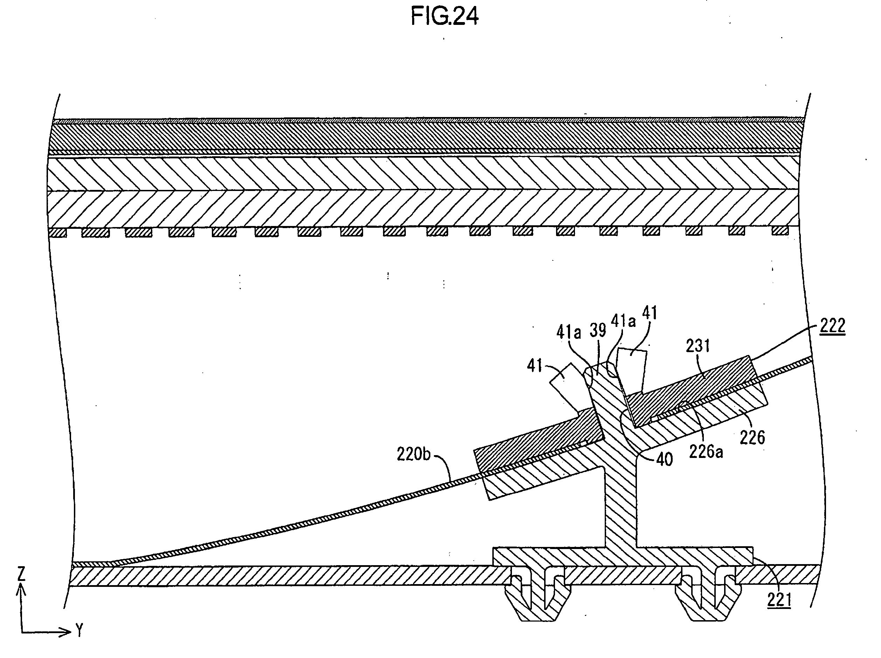

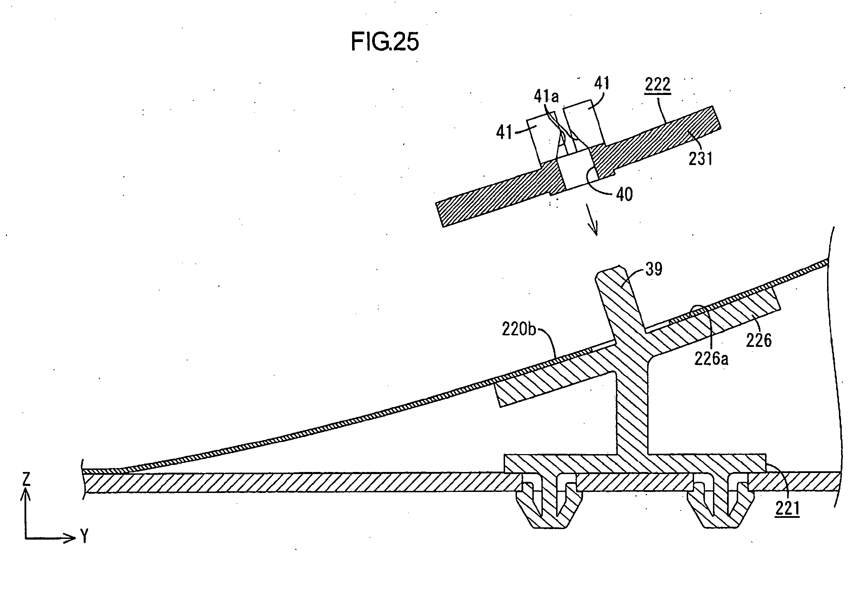

A third embodiment of the present invention will be described with reference to FIG. 24 or 25. The third embodiment shows a configuration in which the configuration of a second holding member 222 and the fitting-retaining structure are changed. Note that a redundant explanation of the same components, operations, and effects as those of the above-described first embodiment is not repeated here. FIG. 24 is an enlarged sectional view of a principal part of each of the holding members and the reflection sheet. FIG. 25 is an enlarged sectional view of the principal part showing the state before the second holding member is mounted.

As shown in FIG. 24, a receiving portion 226 of a first holding member 221 is provided with a fitting projection 39 projecting to the front side. The fitting projection 39 is formed into a columnar shape substantially vertically rising to a receiving surface 226a of the receiving portion 226, and the axis direction thereof is inclined with respect to each of the Y-axis direction and the Z-axis direction. Meanwhile, the second holding member 222 includes a pressing portion 231 having a fitting hole 40 receiving the fitting projection 39, and an engaging part 41 projecting from the pressing portion 231 to the front side, and does not include the supporting portion 32 illustrated in the first embodiment. The inner surface of the engaging part 41 is provided with an inclined surface 41a facing the fitting hole 40. The inclined surface 41a has a slope from the projecting proximal end side of the engaging part 41 toward the projecting distal end side, and gradually projects toward the inside. This forms a shape in which the projecting proximal end portion of the engaging part 41 is tapered toward the projecting proximal end side, and is increased in thickness toward the projecting distal end side. Accordingly, when a second holding member 222 is mounted to a first holding member 221 from the state shown in FIG. 25, the fitting projection 39 is fit into the fitting hole 40 of a pressing portion 231 and the fitting projection 39 is in slide contact with the inclined surface 41a of the engaging part 41, thereby elastically enlarged and deformed so as to push out the engaging part 41 as shown in FIG. 24. The second holding member 222 is retained in the state where the rising portion 220b is held with the first holding member 221, by a spring force of the engaging part 41 and a frictional force acting between the outer surface of the fitting projection 39 and the inner surface of each of the fitting hole 40 and the engaging part 41.

### <Fourth embodiment>

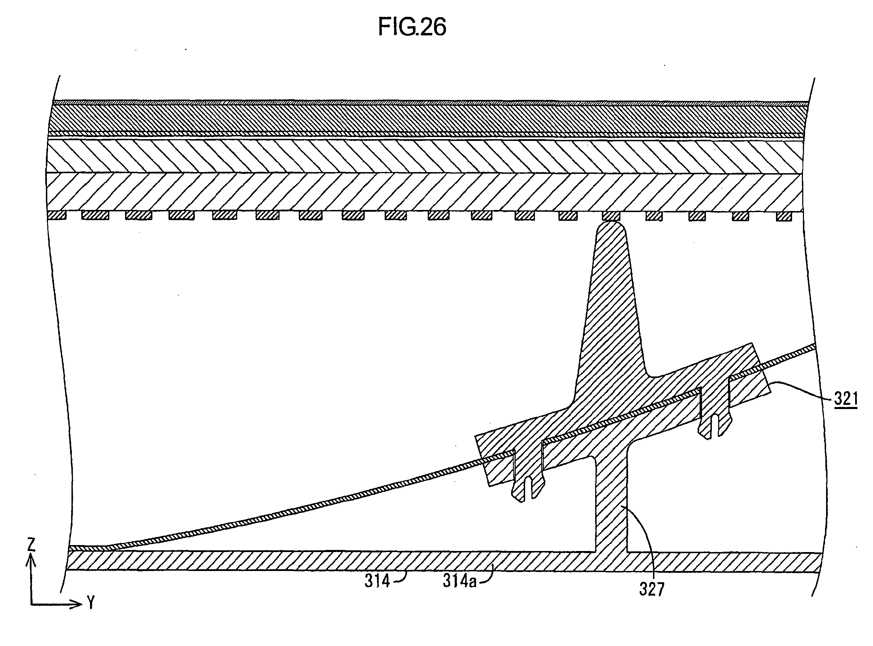

A fourth embodiment of the present invention will be described with reference to FIG. 26. In this fourth embodiment, a first holding member 321 is modified. Note that a redundant explanation of the same compositions, operations, and effects as those of the above-described first embodiment is not repeated here. FIG. 26 is an enlarged sectional view of a principal part of each of the holding members and the reflection sheet.

As shown in FIG. 26, the first holding member 321 is integrally formed with a bottom plate 314a of a chassis 314. Specifically, a shaft portion 327 of the first holding member 321 is formed to continuous with the bottom plate 314a, thereby fixing the first holding member 321 to the chassis 314.

As described above, according to this embodiment, the first holding member 321 is integrally formed with the chassis 314. With this configuration, the first holding member 321 is integrally formed with the chassis 314, thereby being fixed to the chassis 314. Moreover, the need for the operation of mounting the first holding member 321 to the chassis 314 is eliminated.

### <Fifth embodiment>

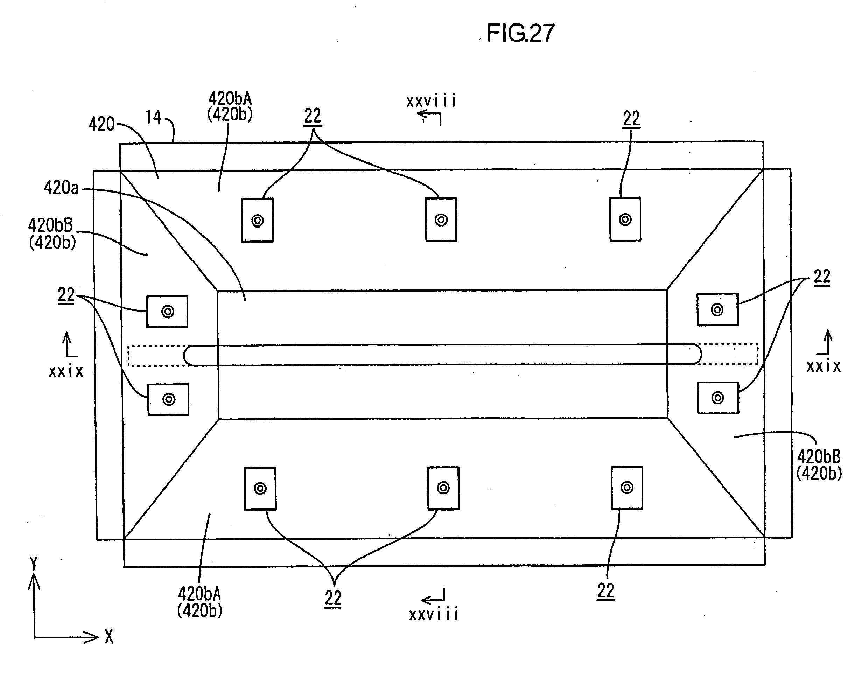

A fifth embodiment of the present invention will be described with reference to FIGS. 27 to 29. In this fifth embodiment, the shape of a reflection sheet 420 and the layout of both the holding members 21 and 22 are changed. Note that a redundant explanation of the same components, operations, and effects as those of the above-described first embodiment is not repeated here.

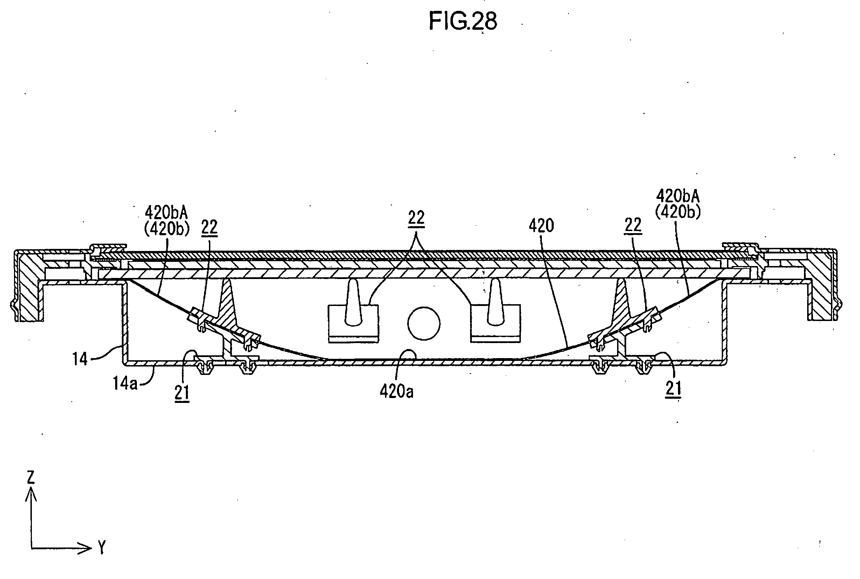

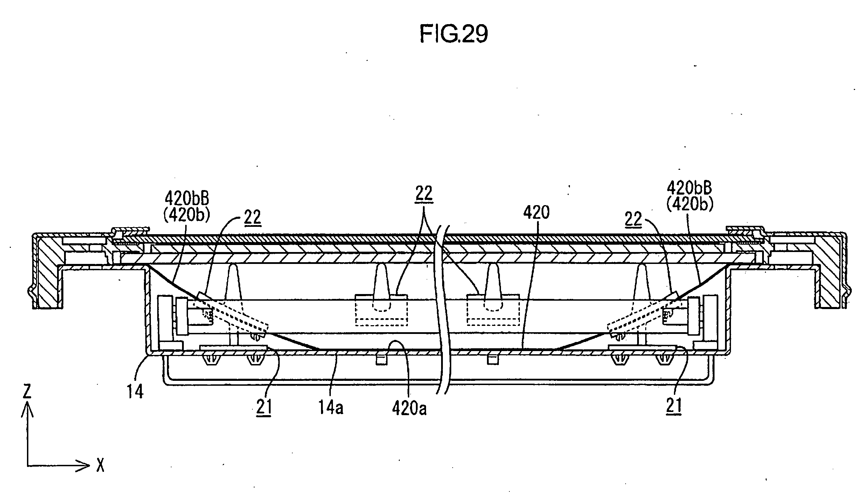

FIG. 27 is a plan view showing an arrangement configuration of each of a hot cathode tube and holding members in the chassis. FIG. 28 is a sectional view taken along the line xxviii-xxviii of FIG. 27. FIG. 29 is a sectional view taken along the line xxix-xxix of FIG. 27.

As shown in FIGS. 27 to 29, the reflection sheet 420 is formed in a bowl shape as a whole, and includes a bottom portion 420a, which is provided at the center side of the bottom plate 14a of the chassis 14, and four rising portions 420b in total which respectively rise from the both ends on the long side of the bottom portion 420a and from the both ends on the short side thereof. The rising portions 420b include a pair of first rising portions 420bA, which rises from the both ends on the long side of the bottom portion 420a and are provided at positions sandwiching the bottom portion 420a in the Y-axis direction, and a pair of second rising portions 420bB, which rises from the both ends on the short side of the bottom portion 420a, is provided at positions sandwiching the bottom portion 420a in the X-axis direction, and is adjacent to the first rising portion 420bA. The first rising portions 420bA and the second rising portions 420b have an inclined shape rising with a predetermined rising angle from the bottom portion 420a. The first rising portions 420bA and the second rising portions 420bB are formed to continuous with each other, and are bent at a boundary position thereof. Meanwhile, three pairs of each of the holding members 21 and 22 are arranged at positions overlapping with the first rising portions 420bA in plan view, and two pairs of each of the holding members 21 and 22 are arranged at positions overlapping with the second rising portions 420bB in plan view. These pairs can hold the corresponding first rising portions 420bA and second rising portions 420bB.

### <Sixth embodiment>

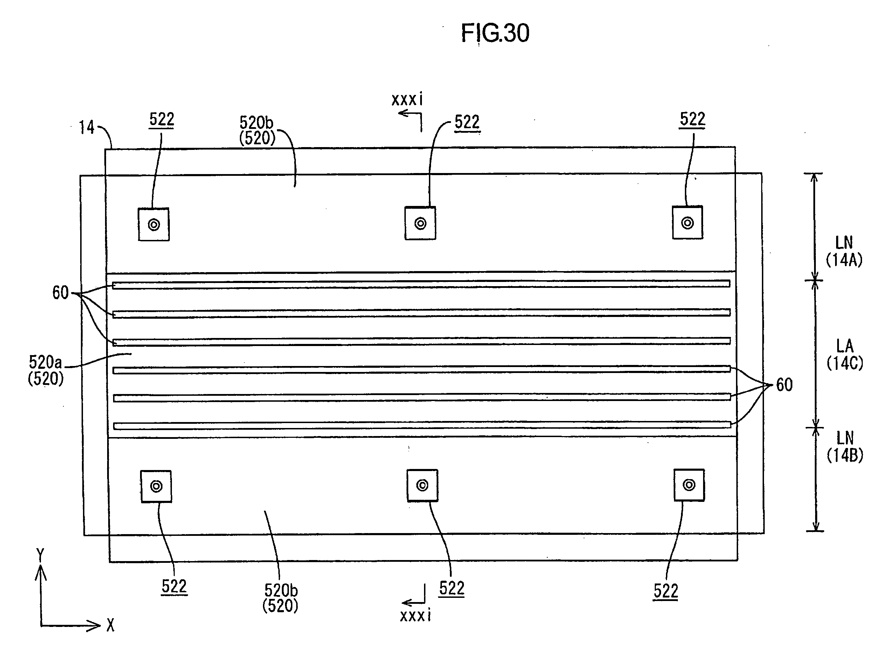

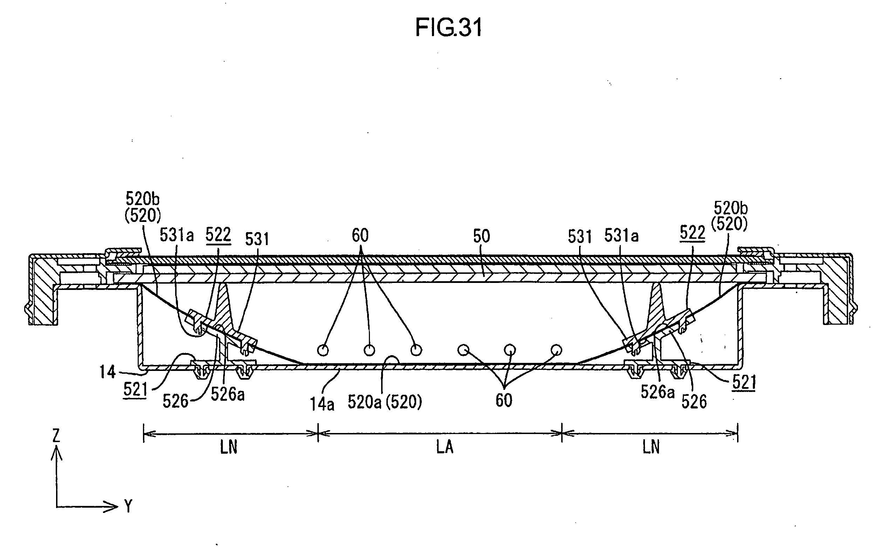

A sixth embodiment of the present invention will be described with reference to FIG. 30 or 31. This sixth embodiment shows a configuration in which a cold cathode tube 60 is used as a light source and the shape of each of a reflection sheet 520 and holding members 521 and 522 is changed. In this embodiment, both the holding members 521 and 522 have substantially the same configuration as that of the first embodiment. Note that a redundant explanation of the same components, operations, and effects as those of the above-described first embodiment is not repeated here.

FIG. 30 is a plan view showing an arrangement configuration of a cold cathode tube and holding members in the chassis. FIG. 31 is a sectional view taken along the line xxxi-xxxi of FIG. 30.

In this embodiment, as shown in FIG. 30, the cold cathode tube 60 serving as the light source (linear light source) has a elongated tube shape (linear shape), and includes a hollow, elongated glass tube sealed at both ends thereof, and a pair of electrodes enclosed in the both ends of the glass tube. Mercury, rare gas, and the like are enclosed in the glass tube and a fluorescent material is applied onto the inner wall thereof. Relay connectors (not shown) are provided at both ends of the cold cathode tube 60, and the relay connectors are connected to lead terminals projecting outside of the glass tube from the electrodes. The cold cathode tube 60 is connected to an inverter board (not shown) mounted on the outer surface side of the bottom plate 14a of the chassis 14 through the relay connectors, and the driving thereof can be controlled. Note that the outer diameter dimension of the cold cathode tube 60 is smaller than the outer diameter dimension (for example, about 15.5 mm) of the hot cathode tube 17 illustrated in the first embodiment, and is about 4 mm, for example.

Six cold cathode tubes 60 each having the above-described configuration are arranged in parallel at predetermined intervals (array pitch) and housed in the chassis 14 in an eccentrically located form in the state where the lengthwise direction (axis direction) thereof coincides with the long-side direction of the chassis 14. More specifically, as shown in FIGS. 30 and 31, when the bottom plate 14a (the portion opposite to the diffuser plate 50) of the chassis 14 is equally partitioned into the first end portion 14A in the short-side direction, the second end portion 14B positioned at the end portion on the side opposite to the first end portion 14A, and the central portion 14C sandwiched therebetween, each cold cathode tube 60 is provided in the central portion 14C of the bottom plate 14a, and forms the light source arrangement area LA. The light source arrangement area LA according to this embodiment is larger than that of the first embodiment. Meanwhile, the cold cathode tube 60 is not arranged in any of the first end portion 14A and the second end portion 14B of the bottom plate 14a, but the light source non-arrangement area LN is formed therein. Specifically, the cold cathode tubes 60 form the light source arrangement area LA in the form of being eccentrically located at the central portion in the short-side direction of the bottom plate 14a of the chassis 14. The area of the light source arrangement area LA is larger than the area of each light source non-arrangement area LN. Furthermore, the ratio of the area (the length dimension in the Y-axis direction) of the light source arrangement area LA to the entire screen area (the longitudinal dimension (short-side dimension) of the screen) is larger than that of the first embodiment, and is about 42%, for example. A pair of the light source non-arrangement areas LN has substantially the same area. The cold cathode tubes 60 are formed to have a length dimension substantially equal to the horizontal dimension (long-side dimension) of the screen.

The short-side dimension of a bottom portion 520a of the reflection sheet 520 is set to be slightly wider than the light source arrangement area LA of the bottom plate 14a of the chassis 14, and the bottom portion 520a overlaps, in plan view, with the light source arrangement area LA. Specifically, the formation range of the bottom portion 520a is expanded according to the light source arrangement area LA. In association with this, the formation range of a rising portion 520b corresponding to the light source non-arrangement area LN is reduced. Accordingly, the curvature of the rising portion 520b is larger than that of the first embodiment. In accordance with a change in the curvature of the rising portion 520b, curvatures of a receiving surface 526a and a pressing surface 531a of a receiving portion 526 and a pressing portion 531 of both the holding members 521 and 522 are respectively changed.

As described above, according to this embodiment, the light source is formed of the cold cathode tubes 60. This extends life of the light source and dimming of light is easily performed.

### <Seventh embodiment>

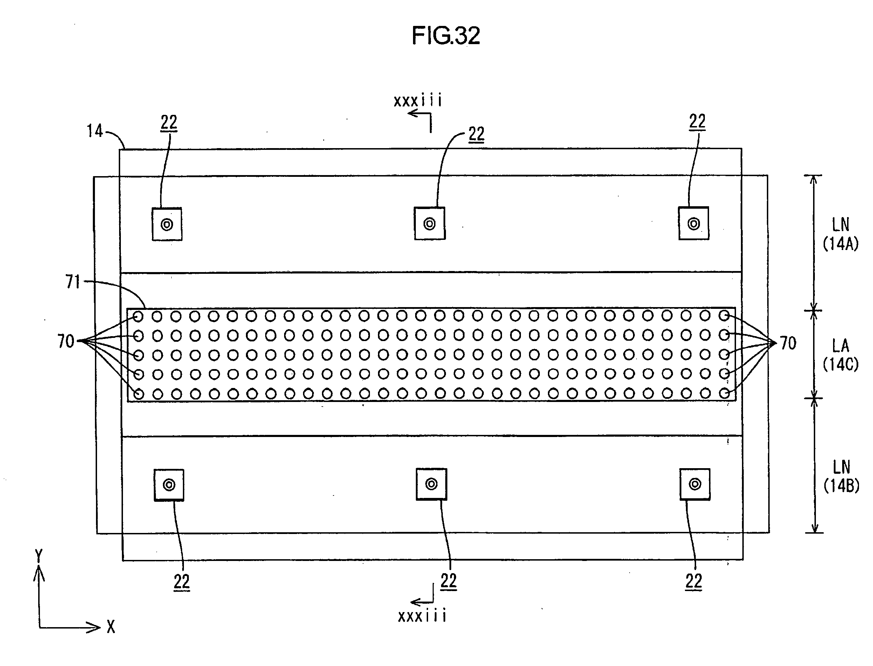

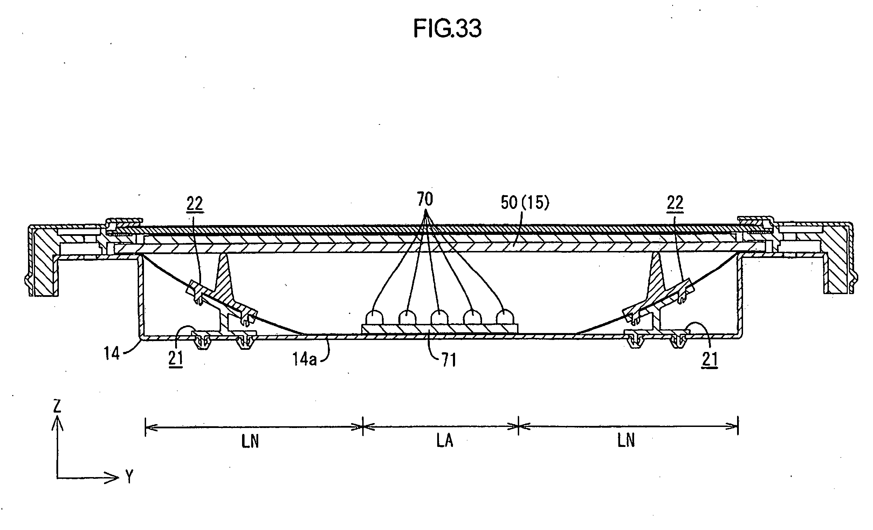

A seventh embodiment of the present invention will be described with reference to FIG. 32 or 33. This seventh embodiment illustrates the case where LEDs 70 are used as the light source. In this embodiment, both the holding members 21 and 22 have a configuration substantially similar to that of the first embodiment. Note that a redundant explanation of the same components, operations, and effects as those of the above-described first embodiment is omitted.

FIG. 32 is a plan view showing an arrangement configuration of LEDs and holding members in the chassis. FIG. 33 is a sectional view taken along the line xxxiii-xxxiii of FIG. 32.

In this embodiment, as shown in FIGS. 32 and 33, a number of LEDs 70 forming the light source are mounted on an LED substrate 71 housed in the chassis 14, thereby forming the linear light source extending along the X-axis direction as a whole. The front surface of the LED substrate 71 is made of synthetic resin having white color which is excellent for the light reflectivity, and is provided to extend along the bottom plate 14a of the chassis 14 and fixed to the bottom plate 14a by fixing means which is not shown. The LED substrate 71 has a long rectangular shape in plan view, and is mounted on the bottom plate 14a in the state where the long-side direction thereof coincides with the long-side direction of the chassis 14. The short-side dimension of the LED substrate 71 is smaller than the longitudinal dimension of the screen (the short-side dimension of the chassis 14), and the long-side dimension of the LED substrate 71 is substantially the same as the horizontal dimension of the screen (the long-side dimension of the chassis 14). The LED substrate 71 has a wiring pattern formed of a metal film and is mounted with the LEDs 70 at predetermined positions. The LED substrate 71 is connected to an external control board which is not shown. An electric power necessary for turning on the LEDs 70 is supplied from the external control board, and the driving of the LEDs 70 can be controlled.

The LEDs 70 are so-called front surface mounting type LEDs which are mounted on the front surface of the LED substrate 71. A number of the LEDs 70 are arranged in parallel in a grid (in a matrix) in the X-axis direction and the Y-axis direction on the front side surface of the LED substrate 71. Each LED 70 has a configuration in which LED chips are sealed by a resin material on a substrate portion fixed to the LED substrate 71. There are three types of LED chips mounted on the substrate portion, and the LED chips have different principal luminous wavelengths. Specifically, the LED chips are configured to emit light for each color of R (red), G (green), and B (blue). The LEDs 70 are top type LEDs whose surface on the side opposite to the mounting surface with respect to the LED substrate 71 is a light emitting surface. The optical axis of each LED 70 substantially coincides with the Z-axis direction (a direction orthogonal to the plate surface of each of the liquid crystal panel 11 and the optical member 15).

When the bottom plate 14a (the portion opposite to the diffuser plate 50) of the chassis 14 is equally partitioned into the first end portion 14A in the short-side direction, the second end portion 14B positioned at the end portion on the side opposite to the first end portion 14A, and the central portion 14C sandwiched therebetween, the LED substrate 71 on which a number of LEDs 70 are mounted is arranged in the central portion 14C of the bottom plate 14a, and forms the light source arrangement area LA therein. Meanwhile, the LED substrate 71 is not arranged in each of the first end portion 14A and the second end portion 14B of the bottom plate 14a, but the light source non-arrangement area LN is formed therein. Specifically, the LEDs 70 and the LED substrate 71 form the light source arrangement area LA in the eccentrically located form at the central portion in the short-side direction of the bottom plate 14a of the chassis 14. Note that the ratio of area (the length dimension in the Y-axis direction) of the light source arrangement area LA to the entire area of the screen (the longitudinal dimension (short-side dimension) of the screen) can be appropriately set and may be set to be equal to that of the first embodiment or the sixth embodiment. More alternatively, the ratio may be set to values other than the values shown in the first and six embodiments.

As described above, according to this embodiment, the light source is formed of LEDs 70. This extends life of the light source and reduces power consumption.

### <Other embodiment>

The present invention is not limited to the embodiments described above with reference to the drawings. For example, the following embodiments can also be included in the technical scope of the present invention.
(1) The first holding member and the second holding member may be mounted such that the interval between the receiving portion and the pressing portion is greater than the thickness dimension of the rising portion. The present invention also includes such a configuration. With this configuration, a clearance is retained between the receiving portion, the pressing portion, and the rising portion, which suitably allows expansion and contraction when the rising portion is thermally expanded or thermally contracted. Accordingly, occurrence of deformation, such as wrinkle or bending of the reflection sheet, can be suppressed.
(2) In addition to the above-described embodiments, the shape of the rising portion can be changed as needed. Specifically, the sectional shape of the rising portion may be a curved shape (a quadratic curve shape, an elliptical shape, or the like) other than the arcuate shape. The shape of the receiving portion (receiving surface) and the pressing portion (pressing surface) may be changed to follow the shape, thereby making it possible to appropriately hold the rising portion.
(3) The above-described first, second, and fourth to seventh embodiments illustrate the configuration in which each of the receiving surface of the first holding member and the pressing surface of the second holding member has a shape that follows the rising portion. However, the present invention also includes a configuration in which only one of the receiving surface and the pressing surface has a shape that follows the rising portion, and the other does not have the shape that follows the rising portion.
(4) In addition to the above-described embodiments, the number of both the holding members to be arranged in the plane with respect to the rising portion, and the installation number thereof can be changed as needed.
(5) The above-described first, second, and fourth to seventh embodiments illustrate the configuration in which the fitting projection is provided on the second holding member side and the fitting hole (fitting recess) is provided on the first holding member side. However, the present invention also include a configuration in which the fitting-retaining structures are reversed such that the fitting projection is provided on the first holding member side and the fitting hole (fitting recess) is provided on the second holding member side.
(6) In addition to the above-described embodiments, the installation number and the arrangement of the fitting-retaining structures may be changed as needed.
(7) In addition to the above-described first to third and fifth to seventh embodiments, the mounting structure of the first holding member with respect to the chassis can be changed. For example, the mounting portion and the mounting hole may be omitted, and the bottom plate pressing portion may be directly fixed to the bottom plate with an adhesive or the like.
(8) The second embodiment described above illustrates the configuration in which the second holding member is provided on the bottom portion side and the first holding member is provided on the side opposite to the bottom portion side. However, the present invention also includes a configuration in which the arrangement is reversed such that the first holding member is provided on the bottom portion side and the second holding member is provided on the side opposite to the bottom portion side.
(9) As a modified example of the above-described second embodiment, the size of the receiving portion or the pressing portion may be changed. For example, the present invention also includes a configuration in which the receiving portion is extended to reach the first portion of the rising portion, and a configuration in which the pressing portion is extended to reach the second portion of the rising portion. In this case, the arrangement in plan view of the fitting-retaining structure can also be changed.
(10) Each embodiment described above illustrates the configuration in which both the first holding member and the second holding member have a white front surface. However, the front surface of the first holding member may have color other than white. The first holding member is positioned at the back side of the rising portion, and is hardly exposed to the front side. Accordingly, even when the color is set such that the light reflectance of the front surface decreases, for example, there is little effect on the optical performance of the backlight unit.
(11) Each embodiment described above illustrates the configuration in which the front surface of each holding member has white color. However, the color of the front surface of each holding member may be milky white or silver, for example. Application of a coating material of a desired color onto the front surface of each holding member enables setting of the color of the front surface.
(12) Each embodiment described above illustrates the configuration in which each angle formed by the rising portion, the receiving surface of the receiving portion, and the pressing surface of the pressing portion with respect to the Y-axis direction is an acute angle equal to or less than 45 degrees. However, the present invention also includes a configuration in which the angle is an acute angle equal to or larger than 45 degrees.
(13) Each embodiment described above illustrates the configuration in which the axis direction of the supporting portion coincides with the Z-axis direction. However, the present invention also includes a configuration in which the axis direction of the supporting portion is set to be slightly inclined with respect to the Z-axis direction.
(14) Though each embodiment described above illustrates the case where the chassis made of synthetic resin is used, the present invention is also applicable to a chassis made of metal.
(15) Each embodiment described above illustrates the form in which the both holding members partially hold the rising portion in the direction from the bottom portion to the rising portion. However, the present invention also includes a form in which both the holding members hold the rising portion over the overall length in the direction described above.
(16) Though each embodiment described above illustrates the configuration in which the rising portion is provided at the end portion of the reflection sheet, the present invention is also applicable to a configuration in which a rising portion having a mountain-like sectional shape is provided at the central side portion of the reflection sheet, for example. Also in this case, both the holding members may be mounted at each position corresponding to the rising portion.
(17) Each embodiment described above illustrates the reflection sheet having a form in which the bottom portion and the rising portion are continuously formed. However, the present invention is also applicable to a form using a reflection sheet of a separated configuration in which the bottom portion and the rising portion are separated.
(18) In the above-described fifth embodiment, the cold cathode tube described in the sixth embodiment may be used as the light source, and the LEDs described in the seventh embodiment may also be used.
(19) Each embodiment described above illustrates the configuration in which the supporting portion comes into contact with the diffuser plate in the straight state along the X-axis direction and the Y-axis direction. However, the present invention also includes a configuration in which the supporting portion does not come into contact with the diffuser plate in the straight state as described above (specifically, a configuration in which the projecting distal end portion of the supporting portion is provided to be closer to the light source with respect to the light source side of the diffuser plate). This configuration allows the diffuser plate to be deformed to be warped to the light source side within the range of the clearance retained with the supporting portion even when the diffuser plate is thermally expanded due to a change in thermal environment within the backlight unit, for example. This can suppress generation of bending, wrinkle, or the like in the diffuser plate, and can suppress occurrence of the uneven brightness in the illumination light exited from the diffuser plate.
(20) Though the above-described first embodiment illustrates the configuration in which a single hot cathode tube is used as the light source, the number of hot cathode tubes to be used can be changed and two or more hot cathode tubes may be used. Specifically, when two hot cathode tubes are used, for example, the ratio of the light source arrangement area to the longitudinal dimension of the screen is preferably about 37%, for example. Note that when three or more hot cathode tubes are used, the ratio of the light source arrangement area may be adjusted in proportional to the number of hot cathode tubes.
(21) Though the above-described sixth embodiment illustrates the configuration in which six cold cathode tubes are used as the light source, the number of cold cathode tubes to be used can be changed, and five or less or seven or more cold cathode tubes may be used. Specifically, when four cold cathode tubes are used, for example, the ratio of the light source arrangement area to the longitudinal dimension of the screen is preferably about 26%, for example. When eight cold cathode tubes are used, for example, the ratio of the light source arrangement area to the longitudinal dimension of the screen is preferably about 58%, for example. When the number of cold cathode tubes to be used is changed to the number other than these numbers, the ratio of the light source arrangement area may be adjusted in proportional to the number of cold cathode tube to be used.
(22) In the above-described seventh embodiment, the size of the LED substrate with respect to the chassis, the installation position and the installation number of the LEDs on the LED substrate can be changed as needed.
(23) Each embodiment described above illustrates a configuration in which the central portion of the chassis is used as the light source arrangement area and the first end portions and the second end portion are used as the light source non-arrangement area. However, the present invention also includes a configuration in which at least one of the first end portion and the second end portion of the chassis is used as the light source arrangement area, and the other portions are used as the light source non-arrangement area. In this case, both the first end portion and the central portion may be used as the light source arrangement area, or both the second end portion and the central portion may be used as the light source arrangement area.
(24) Each embodiment described above illustrates the configuration in which the light sources are eccentrically located and arranged in the chassis (the configuration including both the light source arrangement area and the light source non-arrangement area). However, the present invention is also applicable to a configuration in which the light sources are evenly arranged over the entire area of the chassis.
(25) The above-described first to sixth embodiments illustrate the case where a hot cathode tube or a cold cathode tube, which is one type of fluorescent tubes (linear light sources), is used as a light source. However, the present invention also includes light sources using other types of fluorescent tubes. Further, the present invention includes light sources using discharges tube (such as a mercury lamp) other than the fluorescent tube.
(26) The above-described seventh embodiment illustrates a light source using LEDs, which is one type of dot-type light source. However, the present invention also includes light sources using other types of dot-type light sources. Furthermore, planar light sources such as an organic EL may also be used.
(27) Each embodiment described above illustrates the case where one type of light source is used. However, the present invention also includes various types of light sources to be mixedly used. Specifically, a combination of a hot cathode tube and a cold cathode tube, a combination of a hot cathode tube and LEDs, a combination of a cold cathode tube and LEDs, or a combination of a hot cathode tube, a cold cathode tube, and LEDs may also be used.
(28) In each embodiment described above, each dot of the dot pattern forming the light reflecting portion of the diffuser plate has a circular shape, but the shape of each dot is not limited to this. Any shape such as an elliptical shape or a polygonal shape can be selected.
(29) Each embodiment described above illustrates the configuration in which the light reflecting portion is printed on the front surface of the diffuser plate. However, the present invention also includes a configuration using other forming means such as metal vapor deposition.
(30) In each embodiment described above, the light reflecting portion is formed on the front surface of the diffuser plate, thereby adjusting the light reflectance within the plane of the diffuser plate. However, the light reflectance of the diffuser plate itself may be adjusted in the following manner, for example. The diffuser plate typically has a configuration in which light scattering particles are dispersed in a translucent substrate. The light reflectance of the diffuser plate itself can be determined by the blending ratio (weight%) of the light scattering particles to the translucent substrate. That is, a relatively large light reflectance can be set by setting a relatively large blending ratio of the light scattering particles. A relatively small light reflectance can be set by setting a relatively small blending ratio of the light scattering particles.
(31) In each embodiment described above, the area of each dot forming the light reflecting portion is changed to thereby design and control the light reflectance of the diffuser plate. However, the present invention also includes a case where the arrangement interval of dots having the same area is changed, and a case where means for forming dots having different light reflectance, for example, is used, as control means for the light reflectance. Among these means, the dots having different light reflectance may be formed of a plurality of materials having different light reflectance, for example.
(32) Each embodiment described above illustrates the configuration in which the light reflecting portion is formed on the diffuser plate of the optical member, and the light reflectance is appropriately controlled. However, the present invention also includes a configuration in which the light reflecting portion is formed on an optical member other than the diffuser plate, and the light reflectance is appropriately controlled. The number and type of the diffuser plates and optical sheets to be used as the optical member can be changed as needed.
(33) In addition to the above-described embodiments, the screen size, the aspect ratio, and the like of the liquid crystal display device can be changed as needed.
(34) Each embodiment described above illustrates the longitudinal state in which the short-side direction of each of the liquid crystal panel and the chassis coincides with the vertical direction thereof. However, the lighting device may be arranged in a longitudinal state in which the long-side direction of each of the liquid crystal panel and the chassis coincides with the vertical direction thereof.
(35) Each embodiment described above uses TFTs as switching components of a liquid crystal display device. However, liquid crystal display devices may use switching components other than TFTs such as thin film diode (TFD). The liquid crystal display device may be the one for monochrome display other than the one for color display.
(36) Each embodiment described above illustrates a liquid crystal display device using a liquid crystal panel as a display panel. However, display devices using other types of display panels may be used.
(37) Each embodiment described above illustrates a television receiver including a tuner. However, display devices including no tuner may be used.

### EXPLANATION OF SYMBOLS

- 10:: Liquid crystal display device (Display device)
- 11:: Liquid crystal panel (Display panel)
- 12:: Backlight unit (Lighting device)
- 14, 314:: Chassis
- 14a, 314a:: Bottom plate
- 14b:: Side plate
- 14c:: Support plate
- 14A:: First end portion
- 14B:: Second end portion
- 14C:: Central portion
- 15:: Optical member
- 17:: Hot cathode tube (Light source)
- 20, 120, 420, 520:: Reflection sheet
- 20a, 120a, 420a:: Bottom portion
- 20b, 120b, 220b, 420b:: Rising portion
- 20c:: Extending portion
- 21, 121, 221, 321, 521:: First holding member
- 22, 122, 222, 522:: Second holding member
- 26a, 126a, 226a, 526a:: Receiving surface
- 30:: Fitting hole (Fitting-retaining structure, fitting recessed portion)
- 31a, 131a, 531a:: Pressing surface
- 32:: Supporting portion
- 33:: Fitting projection (Fitting-retaining structure)
- 34:: Insertion hole
- 35:: Fitting recess (Fitting-retaining structure, fitting recessed portion)
- 37:: Fitting protrusion (Fitting-retaining structure)
- 39:: Fitting projection (Fitting-retaining structure)
- 40:: Fitting hole (Fitting-retaining structure)
- 42:: Engaging part (Fitting-retaining structure)
- 42b:: Pressing surface
- 50:: Diffuser plate (optical member)
- 51:: Optical sheet (optical member)
- 52:: Light reflecting portion
- 52a:: Dot
- 60:: Cold cathode tube (Light source)
- 70:: LED (Light source)
- DA:: Light source overlapping portion (Portion overlapping with a light source arrangement area)
- DN:: light source non-overlapping portion (Portion overlapping with a light source non-arrangement area)
- LA:: Light source arrangement area
- LN:: Light source non-arrangement area
- TV:: Television receiver

## Claims

1. A lighting device (12) comprising:
a light source (17);
a chassis (14, 314) including a bottom plate (14a, 314a) arranged on a side opposite to a light exit side with respect to the light source and configured to house the light source therein;
a reflection sheet (20, 120, 420, 520) including a bottom portion (20a, 120a, 420a) and a rising portion (20b, 120b, 220b, 420b), the bottom portion extending along the bottom plate and the rising portion rising from the bottom portion to the light exit side, the reflection sheet configured to reflect light;
a first holding member (21, 121, 221, 321) arranged on a side opposite to the light exit side with respect to the rising portion and fixed to the chassis; and
a second holding member (22, 122, 222) arranged on the light exit side with respect to the rising portion, and configured to sandwich the rising portion with the first holding member,
**characterized in that**
the first holding member has a receiving surface (26a, 126a, 226a, 526a) receiving the rising portion from a side opposite to the light exit side; and
the second holding member has a pressing surface (31 a, 131 a, 531 a) pressing the rising portion from the light exit side.

2. The lighting device according to claim 1, wherein at least one of the receiving surface and the pressing surface is formed to follow a shape of the rising portion.

3. The lighting device according to claim 2, wherein the rising portion and at least one of the receiving surface and the pressing surface have an arcuate sectional shape taken along a direction in which the rising portion rises from the bottom portion.

4. The lighting device according to claim 3, wherein the rising portion and at least one of the receiving surface and the pressing surface have substantially a same curvature.

5. The lighting device according to any one of claims 2 to 4, wherein the rising portion and at least one of the receiving surface and the pressing surface make an acute angle with respect to the bottom portion.

6. The lighting device according to any one of claims 1 to 5, wherein the first holding member and the second holding member have a fitting-retaining structure (30, 33, 35, 37, 39, 40, 42) configured to hold the first holding member and the second holding member by fitting to each other.

7. The lighting device according to claim 6, wherein the fitting-retaining structure includes at least a pair of fitting-retaining structures provided at positions spaced apart from each other in plan view.

8. The lighting device according to claim 6 or 7, wherein the fitting-retaining structure includes a fitting projection (33-, 39) and a fitting recessed portion (35), the fitting projection is provided on the first holding member and projects to a side opposite to the light exit side, and the fitting recessed portion is provided on the second holding member and configured to receive the fitting projection.

9. The lighting device according to any one of claims 6 to 8, wherein the rising portion is provided with an insertion hole (34) through which the fitting-retaining structure is inserted.

10. The lighting device according to any one of claims 1 to 9, further comprising an optical member (50, 51) arranged on the light exit side with respect to the light source,
wherein the second holding member is provided with a supporting portion (32) having an axis crossing a space within the chassis and configured to support the optical member from a side opposite to the light exit side.

11. The lighting device according to claim 10, wherein the supporting portion has an axis direction substantially perpendicular to a plate surface of the optical member.

12. The lighting device according to any one of claims 1 to 11, wherein the second holding member has a surface light reflectance higher than that of the first holding member.

13. A display device (11) comprising:
the lighting device according to any one of claims 1 to 12; and
a display panel that performs display using light output from the lighting device.

14. A television receiver (TV) comprising a display device according to claim 13.

## Patentansprüche

1. Beleuchtungsvorrichtung (12), umfassend:
eine Lichtquelle (17);
ein Gehäuse bzw. einen Rahmen bzw. Unterbau (14, 314), das bzw. der eine Bodenplatte (14a, 314a) enthält, die auf einer Seite gegenüberliegend bzw. entgegengesetzt von einer Lichtausgangsseite bezüglich der Lichtquelle angeordnet ist, und konfiguriert ist, die Lichtquelle in sich zu häusen bzw. aufzunehmen;
einen Relexionsbogen (20, 120, 420, 520), der einen Bodenabschnitt (20a, 120a, 420a) und einen Erhebungsabschnitt (20b, 120b, 220b, 420b) enthält, wobei sich der Bodenabschnitt entlang der Bodenplatte erstreckt und sich der Erhöhungsabschnitt von dem Bodenabschnitt zu der Lichtausgangsseite erhöht, wobei der Reflexionsbogen konfiguriert ist, Licht zu reflektieren;
ein erstes Halteglied (21, 121, 221, 321), das auf einer gegenüberliegenden bzw. entgegengesetzten Seite zu der Lichtausgangsseite bezüglich des Erhöhungsabschnitts angeordnet ist und an dem Gehäuse bzw. Rahmen bzw. Unterbau fixiert bzw. befestigt ist; und
ein zweites Halteglied (22, 122, 222), das auf der Lichtausgangsseite bezüglich des Erhöhungsabschnitts angeordnet ist und konfiguriert ist, den Erhöhungsabschnitt sandwichartig mit dem ersten Halteglied zu umgegeben,
**dadurch gekennzeichnet, dass**
das erste Halteglied eine Empfangs- bzw. Aufnahmefläche bzw. -oberfläche (26a, 126a, 226a, 526a) aufweist, die den Erhöhungsabschnitt von einer Seite gegenüberliegend bzw. entgegengesetzt zu der Lichtausgangsseite empfängt bzw. aufnimmt; und
das zweite Halteglied eine Pressfläche bzw. -oberfläche (31 a, 131 a, 531 a) aufweist, die den Erhöhungsabschnitt von der Lichtausgangsseite presst.

2. Beleuchtungsvorrichtung nach Anspruch 1, wobei zumindest eine der Aufnahmefläche und der Pressfläche gebildet ist, einer Form des Erhöhungsabschnitts zu folgen.

3. Beleuchtungsvorrichtung nach Anspruch 2, wobei der Erhöhungsabschnitt und zumindest eine der Aufnahmefläche und der Pressfläche eine bogenförmige Querschnittsform entlang einer Richtung aufweisen, in der sich der Erhöhungsabschnitt von dem Bodenabschnitt erhöht.

4. Beleuchtungsvorrichtung nach Anspruch 3, wobei der Erhöhungsabschnitt und zumindest eine der Aufnahmefläche und der Pressfläche im Wesentlichen eine gleiche Krümmung aufweisen.

5. Beleuchtungsvorrichtung nach einem der Ansprüche 2 bis 4, wobei der Erhöhungsabschnitt und zumindest eine der Aufnahmefläche und der Pressfläche einen spitzen Winkel bezüglich des Bodenabschnitts bilden.

6. Beleuchtungsvorrichtung nach einem der Ansprüche 1 bis 5, wobei das erste Halteglied und das zweite Halteglied eine Passungshaltestruktur (30, 33, 35, 37, 39, 40, 42) aufweisen, die konfiguriert ist, das erste Halteglied und das zweite Halteglied durch Passung aneinander zu halten.

7. Beleuchtungsvorrichtung nach Anspruch 6, wobei die Passungshaltestruktur zumindest ein Paar Passungshaltestrukturen enthält, die an Positionen bereitgestellt sind, die in einer Draufsicht voneinander beabstandet sind.

8. Beleuchtungsvorrichtung nach Anspruch 6 oder 7, wobei die Passungshaltestruktur einen Passungsvorsprung (33, 39) und einen Passungsvertiefungsabschnitt (35) enthält, wobei der Passungsvorsprung an dem ersten Halteglied bereitgestellt ist und zu einer Seite gegenüberliegend bzw. entgegengesetzt zu der Lichtausgangsseite vorspringt, und der Passungsvertiefungsabschnitt an dem zweiten Halteglied bereitgestellt ist und konfiguriert ist, den Passungsvorsprung aufzunehmen.

9. Beleuchtungsvorrichtung nach einem der Ansprüche 6 bis 8, wobei der Erhöhungsabschnitt mit einem Einsetzloch (34) versehen ist, durch das die Passungshaltestruktur eingesetzt ist.

10. Beleuchtungsvorrichtung nach einem der Ansprüche 1 bis 9, ferner umfassend ein optisches Glied (50, 51), das auf der Lichtausgangsseite bezüglich der Lichtquelle angeordnet ist;
wobei das zweite Halteglied mit einem Stütz- bzw. Trägerabschnitt (32) versehen ist, der eine Achse aufweist, die einen Raum innerhalb des Gehäuses kreuzt, und der konfiguriert ist, das optische Glied von einer Seite gegenüberliegend bzw. entgegengesetzt zu der Lichtausgangsseite zu stützen bzw. zu tragen.

11. Beleuchtungsvorrichtung nach Anspruch 10, wobei der Trägerabschnitt eine Achsrichtung im Wesentlichen senkrecht zu einer Plattenfläche bzw. -oberfläche des optischen Glieds aufweist.

12. Beleuchtungsvorrichtung nach einem der Ansprüche 1 bis 11, wobei das zweite Halteglied einen Flächen- bzw. Oberflächenlichtreflexionsgrad aufweist, der höher ist als derjenige des ersten Halteglieds.

13. Anzeigevorrichtung (11), umfassend:
die Beleuchtungsvorrichtung nach einem der Ansprüche 1 bis 12; und
eine Anzeigetafel bzw. -feld, die bzw. das eine Anzeige unter Verwendung von Licht von der Beleuchtungsvorrichtung durchführt.

14. Fernsehempfangsgerät (TV), umfassend die Anzeigevorrichtung nach Anspruch 13.

## Revendications

1. Dispositif d'éclairage (12) comprenant :
une source lumineuse (17) ;
un châssis (14, 314) incluant une plaque inférieure (14a, 314a) agencée sur un côté opposé à un côté de sortie lumineuse par rapport à la source lumineuse et configuré pour héberger la source lumineuse en son sein ;
une feuille de réflexion (20, 120, 420, 520) incluant une portion inférieure (20a, 120a, 420a) et une portion ascendante (20b, 120b, 220b, 420b), la portion inférieure s'étendant le long de la plaque inférieure et la portion ascendante montant de la portion inférieure au côté de sortie lumineuse, la feuille de réflexion étant configurée pour refléter la lumière ;
un premier élément de maintien (21, 121, 221, 321) agencé sur un côté opposé au côté de sortie lumineuse par rapport à la portion ascendante et fixé au châssis ; et
un second élément de maintien (22, 122, 222) agencé sur le côté de sortie lumineuse par rapport à la portion ascendante et configuré pour prendre en sandwich la portion ascendante avec le premier élément de maintien,
**caractérisé en ce que**
le premier élément de maintien a une surface de réception (26a, 126a, 226a, 526a) recevant la portion ascendante depuis un côté opposé au côté de sortie lumineuse ; et
le second élément de maintien a une surface de pression (31a, 131a, 531a) appuyant sur la portion ascendante depuis le côté de sortie lumineuse.

2. Dispositif d'éclairage selon la revendication 1, dans lequel au moins une de la surface de réception et la surface de pression est formée pour suivre une forme de la portion ascendante.

3. Dispositif d'éclairage selon la revendication 2, dans lequel la portion ascendante et au moins une de la surface de réception et la surface de pression ont une forme en coupe arquée prise le long d'une direction dans laquelle la portion ascendante monte depuis la portion inférieure.

4. Dispositif d'éclairage selon la revendication 3, dans lequel la portion ascendante et au moins une de la surface de réception et la surface de pression ont essentiellement une même courbure.

5. Dispositif d'éclairage selon l'une quelconque des revendications 2 à 4, dans lequel la portion ascendante et au moins une de la surface de réception et la surface de pression font un angle aigu par rapport à la portion inférieure.

6. Dispositif d'éclairage selon l'une quelconque des revendications 1 à 5, dans lequel le premier élément de maintien et le second élément de maintien ont une structure de retenue d'ajustement (30, 33, 35, 37, 39, 40, 42) configurée pour maintenir le premier élément de maintien et le second élément de maintien en les ajustant l'un à l'autre.

7. Dispositif d'éclairage selon la revendication 6, dans lequel la structure de retenue d'ajustement inclut au moins une paire de structures de retenue d'ajustement prévues en des positions écartées l'une de l'autre dans une vue en plan.

8. Dispositif d'éclairage selon la revendication 6 ou 7, dans lequel la structure de retenue d'ajustement inclut une saillie d'ajustement (33, 39) et une portion en retrait d'ajustement (35), la saillie d'ajustement est prévue sur le premier élément de maintien et fait saillie vers un côté opposé au côté de sortie lumineuse, et la portion en retrait d'ajustement est prévue sur le second élément de maintien et configurée pour recevoir la saillie d'ajustement.

9. Dispositif d'éclairage selon l'une quelconque des revendications 6 à 8, dans lequel la portion ascendante est pourvue d'un orifice d'insertion (34) à travers lequel la structure de retenue d'ajustement est insérée.

10. Dispositif d'éclairage selon l'une quelconque des revendications 1 à 9, comprenant en outre un élément optique (50, 51) agencé sur le côté de sortie lumineuse par rapport à la source lumineuse,
dans lequel le second élément de maintien est pourvu d'une portion de support (32) ayant un axe croisant un espace au sein du châssis et configurée pour supporter l'élément optique depuis un côté opposé au côté de sortie lumineuse.

11. Dispositif d'éclairage selon la revendication 10, dans lequel la portion de support a une direction axiale essentiellement perpendiculaire à une surface de plaque de l'élément optique.

12. Dispositif d'éclairage selon l'une quelconque des revendications 1 à 11, dans lequel le second élément de maintien a un facteur de réflexion lumineux superficiel supérieur à celui du premier élément de maintien.

13. Dispositif d'affichage (11) comprenant :
le dispositif d'éclairage selon l'une quelconque des revendications 1 à 12 ; et
un écran d'affichage qui réalise l'affichage en utilisant de la lumière émise depuis le dispositif d'éclairage.

14. Récepteur télévisuel (TV) comprenant un dispositif d'affichage selon la revendication 13.
